# EUROPEAN PATENT APPLICATION

(11) **EP 1 662 783 A1**
(43) Date of publication of application: **31.05.2006**
(21) Application number: 04771551.1
(22) Date of filing: 05.08.2004
(51) Int. Cl.: H04N 5/76, G11B 31/00

(54) **PROGRAM RECORDING DEVICE**

(30) Priority: 05.08.2003 JP 2003286789
(71) Applicant: MATSUSHITA ELECTRIC INDUSTRIAL CO., LTD., Kadoma-shi, Osaka 571-8501 (JP)
(72) Inventor: TANIKAWA, Kentaro, Osaka 571-0030 (JP); TSUSAKA, Yuko, Osaka-shi, Osaka 553-0002 (JP)
(74) Representative: Grünecker, Kinkeldey, Stockmair & Schwanhäusser Anwaltssozietät
(86) International application number: PCT/JP2004/011576
(87) International publication number: WO 2005/013613

(57) **Abstract**

A broadcast program recording apparatus locates a start position of a target broadcast program preset to be recorded, even if a program preceding the target broadcast program is broadcast for an extended time period. In a record/playback apparatus 100, a silence detecting unit 108 detects silent frames and calculates a segment period between detected silent frames. An index registering unit 109 judges whether a program broadcast during the segment period is a CM. If judged in the affirmative, the record/playback apparatus 100 adds the segment period to the total CM period. If judged in the negative, it is further judged whether the total CM period exceeds a threshold. On judging that the threshold is exceeded, the record/playback apparatus 100 generates an index entry composed of a content ID and the display time of a silent frame that is broadcast between the CM and a broadcast program, and stores the index entry to the index storage unit 104.

## Description

### Technical Field

The present invention relates to a broadcast program recording apparatus having a function of recording a broadcast program which is preset to be recorded. More particularly, the present invention relates to techniques employed in a recording method and a playback method for use in such an apparatus.

### Background Art

It is often the case that the broadcast of a sports program, such as a baseball game, is extended. With this observation, recent techniques offer a function of automatically extending a preset recording period when an extension of broadcast program is expected.

For example, a broadcast program which is preset to be recorded (hereinafter, "target broadcast program") is recorded automatically for an extended time period without changing the originally preset start-time when an extension of a broadcast period is expected for any program scheduled to be broadcast before the target broadcast program on the same channel (hereinafter, "preceding program"). With this arrangement, when a preceding program is actually extended, the target broadcast program is recorded, in addition to part of an immediately preceding program. Thus, it is ensured that the entire target broadcast program is recorded without missing any part.

Unfortunately, however, the above technique provides no information for locating the start position of recorded target broadcast program. Due to the absence of such information, users are required to go through, for example, fast-forwarding of the recorded data to find the beginning of target broadcast program. With this being the situation, there is a demand for a way to easily locate the start position of target broadcast program that is recorded for an extended time period.

### Disclosure of the Invention

In view of the above, an object of the present invention is to provide a broadcast program recording apparatus and a data position locating method and program each locating the start position of a recorded target broadcast program in the case where a preceding program is broadcast for an extended time period.

To achieve the object stated above, the present invention provides a broadcast program recording apparatus for receiving broadcast data and recording a target broadcast program which is preset to be recorded onto a recording medium. The recording starts at a scheduled broadcast time of the target broadcast program. The broadcast program recording apparatus includes: an extension information obtaining unit operable to obtain extension information showing that broadcast of a program preceding the target broadcast program will be extended; a judging unit operable to judge, if the extension information is obtained, whether broadcast data being recorded after the scheduled broadcast time is segment data that is sufficiently shorter than the target broadcast program or program data; a monitoring unit operable to monitor, after the judging unit judges that the broadcast data is segment data, whether segment data of a same type is consecutively received; an extracting unit operable to extract, if the judging unit judges that the broadcast data is program data, an end time of a piece of segment data immediately preceding the program data, the extraction being performed when a predetermined condition is satisfied; and a start-position recording unit operable to record, as a start position of the target broadcast program, a position corresponding on the recording medium to the extracted end time.

With the structure stated above, the broadcast program recording apparatus judges, if the extension information is obtained, whether broadcast data being recorded after the scheduled broadcast time is program data or segment data. On judging that the broadcast data is segment data, the broadcast program recording apparatus monitors whether segment data of a same type is consecutively received. On judging that the broadcast data is program data, the broadcast program recording apparatus extracts an end time of a piece of segment data immediately preceding the program data, provided that a predetermined condition is satisfied. The broadcast program recording apparatus then records the position on the recording medium that corresponds to the thus extracted end time as the start position of the target broadcast program. The segment data may be a commercial message or a trailer for a broadcast program. In the case of non-commercial broadcasting, segment data such as trailer for a broadcast program is inserted between the end of a preceding program and the start time of an extended broadcast program. The monitoring unit monitors whether pieces of segment data are consecutively received. When the monitoring unit detects the consecutiveness, the broadcast data is recognized as a segment data group. Thus, the position on the recording medium corresponding to the end time of the segment data group is extracted as the start position of the target broadcast program. As a result, the start position of the target broadcast program is automatically recorded, and the playback is readily started from the recorded start position.

Turning now to the case of commercial broadcasting, unlike non-commercial broadcasting, CM data is broadcast not only between broadcast programs. Groups of CM data are also consecutively broadcast within one broadcast program at regular intervals. That is to say, even if the monitoring unit recognizes a segment data group, i.e. consecutive pieces segment data, it can not be judged whether the segment data group is broadcast within one broadcast program or between different broadcast programs. Yet, a CM data group broadcast between different programs is longer than a CM data group broadcast within one program. Thus, with provision of a predetermined condition relating to the length of broadcast time of a segment data group, the broadcast program recording apparatus is capable of automatically extracting the start position of a target broadcast program also in the case of commercial broadcasting.

Here, the predetermined condition may be that a total time period of consecutively received pieces of segment data is longer than a reference value. The monitoring unit may be an accumulating unit operable to keep accumulating, if the judging unit judges that the broadcast data is segment data, a time period of each piece of segment data until the judging unit next judges that the broadcast data is program data. The extracting unit may (i) include a comparison subunit operable to compare, if the judging unit judges that the broadcast data is program data, a reference value with a total time period of pieces of segment data up to the one immediately preceding the program data, and (ii) extract the end time of the immediately preceding piece of segment data if the comparison subunit judges that the total time period is equal to or longer than the reference value.

The reference value mentioned above is equal to or shorter than a minimum period of a segment data group broadcast between different programs and is longer than a maximumperiod of a segment data group broadcast within one program. Normally in Japan, a value of 300 seconds is suitably used as the reference value.

With the above structure stated above, the broadcast program recording apparatus records the end position of the consecutive pieces of segment data as the start position of the target broadcast program, when the total time of the segment data is judged to be equal to or longer than the reference value. This scheme is effective especially in the case of commercial broadcasting to judge whether a segment data group is broadcast within one broadcast program or between different broadcast programs.

Here, eachpiece of segment data maybe CMdata for displaying an advertisement. The time period of each piece of segment data may be unique to a CM data broadcast. The judging unit may make the judgment by comparing the unique time period with a time interval between transition frames present in the broadcast data being recorded.

The transition frame mentioned above is e. g. a silent frame or black frame that is present between pieces of CM data or between a broadcast program and CM data. The unique time period is a period permitted for a broadcast of one piece of CM data. For example, a plurality of integral multiples, such as 15 seconds, 30 seconds, and 60 seconds, may be set as the length of the unique period.

The broadcast program recording apparatus judges whether the broadcast data is CM data, by comparing the time interval between transition frames with the unique time period. On judging that the broadcast data is not CM data, the broadcast program recording apparatus judges whether the total time period is equal to or longer than the reference value. On judging that the total time period is equal to or longer than the reference value, the broadcast program recording apparatus regards the end position of the immediately preceding piece of CM data as the start position of the target broadcast program. Normally, the total time period of pieces of CM data consecutively broadcast between one broadcast program and another broadcast program is longer than the total time period of pieces of CM data consecutively broadcast within one broadcast program. Based on this characteristic, when the total time period of consecutively broadcast CM data is equal to or longer than the reference value, it is jugged that the CM data is a transition from one broadcast program to another broadcast program. Thus, the broadcast program recording apparatus is capable of locating the start position of the target broadcast program.

Here, the unique time period may be an integral multiple of a minimum time period of a CM data broadcast and equal to or shorter than a maximum time period of a CM data broadcast.

Normally, the minimum time period of a CM data broadcast is 15 seconds. In units of 15 seconds, there may be a piece of CM data that is 30 seconds long or 60 seconds long. Furthermore, the maximum time period of a CM data broadcast is limited in advance to 90 seconds, for example. Based on this characteristic regarding the time period of a CM data broadcast, the judgment as to whether the time interval between two transition frames is equal to the time period of a CM data broadcast.

Here, the reference value may be an integral multiple of the minimum time period and longer than the maximum time period.

In the case of commercial broadcasting, the time period of each segment data group broadcast between different broadcast programs is determined in advance. The time period is five minutes, for example.

Here, if the broadcast data includes audio data, each transition frame may be a silent frame. The judging unit may judge that the broadcast data is CM data if a time interval between two silent frames successive in time sequence is equal to the unique time period.

Normally, a silent frame is broadcast at the beginning and end of each piece of CM data. Thus, the time interval between two silent frames is judged to be a time period of a piece of CM data. This scheme is effective especially in judging whether the broadcast data being recorded is CM data.

Here, the monitoring unit may include a timer that is set each time a silent frame is detected, and judge that the broadcast data being recorded is program data if the timer measures a predetermined time period before reception of a next silent frame.

The predetermined time period is longer than the maximum time period of each piece of CM data. Normally, the maximum time period of a piece of CM data is determined in advance, and a silent frame is broadcast at the beginning and end of each piece of CM data. If a silent frame is detected and no silent frame is detected next within the maximum time period, the broadcast data being recorded after the detection of the silent frame is regarded to be program data. This scheme is effective in judging whether the broadcast data being recorded is CM data.

Here, if the broadcast data includes image data, each transition frame may be a black frame. The judging unit may detect two black frames successive in time sequence, and judge that the broadcast data is CM data if a time interval between the two black frames is equal to the unique time period.

Normally in the United States of America, a black frame is broadcast at the beginning of and end of each piece of CM data. Thus, the time interval between two black frames is considered as a time period of a piece of CM data. This scheme is effective in judging whether the broadcast data being recorded is CM data.

Here, the monitoring unit may include a timer that is set each time a black frame is detected, and judge that the broadcast data being recorded is program data if the timer measures a predetermined time period before reception of a next black frame.

Normally in the United States of America, the maximum time period of a piece of CM data is determined in advance and a black frame is broadcast at the beginning and end of each piece of CM data. If a black frame is detected and no black frame is detected next within the maximum time period, the broadcast data being recorded after the detection of the black frame is judged to be program data. This scheme is effective in judging whether the broadcast data being recorded is CM data.

Here, the predetermined condition may be a detection rule. The apparatus may further include: a storage unit that stores therein two detection rules; and a selecting unit operable to select one of the detection rules stored in the storage unit, based on a channel on which the target broadcast program is scheduled to be broadcast and/or a region in which the apparatus is sited. The start-position recording unit may judge whether the end time of the piece of segment data immediately preceding the program data is acceptable as the start position of the target broadcast program in accordance with the selected detection rule.

One of the two detection rules mentioned above is, for example, a rule applicable to non-commercial broadcasting to judge whether to accept the end position of the segment data group as the start position of the target broadcast program. The other rule is applicable to commercial broadcasting to judge whether to accept the end position of the segment data group as the start position of the target broadcast program. Judgment as to whether the broadcasting is commercial broadcasting or non-commercial broadcasting is made based on the channel number and/or the region in which the broadcast program recording apparatus is sited. Consequently, the broadcast program recording apparatus is capable of judging whether to accept the end position of the segment data group as the start position of the target broadcast program.

Here, one of the detection rules may determine that in a case where two or more pieces of segment data are consecutive and a total time period of the consecutive pieces of segment data is longer than a reference value, a recording-end position of a last one of the consecutive pieces of segment data on the recording medium serves as the start position of the target broadcast program.

By applying the detection rule mentioned above to the case of commercial broadcasting, the broadcast recording apparatus duly locates the start position of the target broadcast program.

Here, one of the detection rules may determine that in a case where one or more pieces of segment data are consecutive and program data is received subsequent to the consecutive pieces of segment data, a recording-end position of a piece of segment data immediately preceding the program data serves as the start position of the target broadcast program.

By applying the detection rule mentioned above to the case of non-commercial broadcasting, the broadcast recording apparatus duly locates the start position of the target broadcast program.

Here, the start-position recording unit may be further operable to record, as a recording-start position, a position on the recording medium from which the recording unit starts recording.

With the structure stated above, the broadcast program recording apparatus is capable of locating the start position of the target broadcast program, even if the broadcast of the preceding program is not extended and thus the target broadcast program is broadcast on time as scheduled.

Here,the broadcast program recording apparatusmay further include a program guide storage unit operable to store therein an electronic program guide showing broadcast schedules of a plurality of programs and including extension information showing that broadcast of at least one program will be extended. The extension information obtaining unit may obtain the extension information from the electronic program guide.

By using the electronic program guide, it is no longer necessary for the user to confirm whether any preceding program will possibly be broadcast for an extended time period.

Here, the start-position recording unit may record the start position and the recording-start position in a storage area allocated within the apparatus.

With the structure stated above, the broadcast program recording apparatus stores the start position and the recording-start position in the memory area allocated within the apparatus.

Here, the start-position recording unit may record, as the start position and the recording-start position, a time elapsed from the recording start to the respective position.

With the structure stated above, the broadcast program recording apparatus records, as the start position and the recording-start position, time elapsed from the recording start to the respective positions.

Here, the recording medium may have broadcast programs recorded thereon, including a broadcast program which was a target broadcast program. The storage area may store the start position and the recording-start position of the target broadcast program on the recording medium. The broadcast program recording apparatus may further include: an instruction receiving unit operable to receive an instruction for thumbnail-list display; a first obtaining unit operable to obtain a first image from the recording medium, the first image being located at a position that is after a predetermined time from an image located at the recording-start position; a second obtaining unit operable to obtain a second image or a third image from the recording medium, the second image being located at the recording-start position and the third image being located at a position that is after a predetermined time from the second image; an image generating unit operable to generate a program-start thumbnail image showing the obtained first image and a recording-start thumbnail image showing the second or the third image; and a display unit operable to display the generated program-start thumbnail image and the generated recording-start thumbnail image.

With the structure stated above, the broadcast program recording apparatus generates and displays a program-start thumbnail image and a recording-start thumbnail image. As a result, the user is informed of the images located at the program-start position and the recording-start position of the broadcast data recorded by the broadcast program recording apparatus.

Here, the broadcast program recording apparatus may further include : a playback unit operable to read and play back a program recorded on the recording medium in one of selectable playback modes. The selectable playback modes may include a first playback mode in which the playback unit searches the recording medium for an image shown by the program-start thumbnail image, and starts the playback from the searched image. The display unit may display, together with the program-start thumbnail image, search playback image information representing the first playback mode.

Since the search playback image information is displayed additionally to the program-start thumbnail image, the user is informed that the broadcast program recording apparatus will start playback of the recorded target broadcast program from the displayed program-start thumbnail image. In other words, the user is informed that search playback will be performed.

Here, the selectable playback modes may further include a second playback mode in which the playback unit starts the playback from an image shown by the recording-start thumbnail image. The display unit may display, together with the recording-start thumbnail image, non-search playback image information representing the second playback mode.

Since the non-search playback image information is displayed additionally to the recording-start thumbnail image, the user is informed that the broadcast program recording apparatus will start playback of the target broadcast program from the displayed recording-start thumbnail image. In other words, the user is informed that the playback will be started from the beginning of the recorded broadcast data.

Here, the display unit may be further operable to generate a graphical image representing an entire length of a program recorded on the recording medium, to mark the generated graphical image so as to indicate where in the program the program-start thumbnail image and the recording-start thumbnail image are located, and to display the marked graphical image.

Since the broadcast program recording apparatus displays the graphical image with markings thereon, the user can visually confirm the positions of the program-start thumbnail image and the recording-start thumbnail image relative to the entire data recorded on the recording medium.

Here, the storage area may store display information relating to the program, in correspondence with the start position and the recording-start position. The display unit may display the program-start thumbnail image and the recording-start thumbnail image each together with the display information.

The display information shows the recording date and time of the program. With this structure, the broadcast program recording apparatus is capable of informing the user about when and on which channel the program data that includes the displayed image is broadcast.

In another aspect, the present invention provides display data for displaying image data included in a broadcast program recorded by a broadcast program recording apparatus that is for receiving and recording broadcast programs. The display data includes: a thumbnail image corresponding to a piece of image data included in the recorded broadcast program; and a graphical representation of a position of the thumbnail image relative to the entire recorded broadcast program.

With the structure stated above, the display data includes a thumbnail image and information about the position of thumbnail image relative to the entire recorded broadcast program. Thus, with reference to the display data, the user can visually confirm where in the entire recorded broadcast program the thumbnail image is located.

Here, the recorded broadcast program may include a target broadcast program preset to be recorded. The thumbnail image may correspond to image data located at a beginning of the target broadcast program. The display data may further include search playback image information representing a playback mode in which the playback apparatus searches the recorded broadcast program for the image data corresponding to the thumbnail image and plays back the recorded broadcast program starting from the searched image data.

With the structure stated above, the user referencing the display data is informed that playback of the recorded broadcast program will be started from the displayed thumbnail image. In other word, the user is informed that search playback will be performed.

Here, the thumbnail image may correspond to image data located at a beginning of the recorded broadcast program. The display data may further include non-search playback image information representing a playback mode in which the playback apparatus plays back the recorded broadcast program starting from the beginning of the recorded broadcast program.

With the structure stated above, the user referencing the display data is informed that playback of the recorded broadcast program will be started from the displayed thumbnail image. In other word, the user is informed that the playback will be started from the beginning of the recorded broadcast program.

In yet another aspect, the present invention provides an integrated circuit for a broadcast program recording apparatus that receives broadcast data and records a target broadcast program which is preset to be recorded onto a recording medium. The recording starts at a scheduled broadcast time of the target broadcast program. The apparatus includes an extension information obtaining unit operable to obtain extension information showing that broadcast of a program preceding the target broadcast program will be extended. The integrated circuit includes: a judging module operable to judge, if the extension information is obtained, whether broadcast data being recorded after the scheduled broadcast time is segment data that is sufficiently shorter than the target broadcast program or program data; a monitoring module operable to monitor, after the judging module judges that the broadcast data is segment data, whether segment data of a same type is consecutively received; an extracting module operable to extract, if the judging module judges that the broadcast data is program data, an end time of a piece of segment data immediately preceding the program data, the extraction being performed when a predetermined condition is satisfied; and a start-position recording module operable to record, as a start position of the target broadcast program, a position corresponding on the recording medium to the extracted end time.

With the structure stated above, the integrated circuit judges whether the broadcast data being recorded after the scheduled broadcast time is segment data or program data. On judging that the broadcast data is segment data, the integrated circuit monitors whether segment data of a same type is consecutively received. On judging that the broadcast data is program data, the integrated circuit extracts an end time of a piece of segment data immediately preceding the program data, provided that a predetermined condition is satisfied. The integrated circuit then records the position on the recording medium that corresponds to the thus extracted end time as the start position of the target broadcast program.

### Brief Description of the Drawings

FIG. 1 is a view showing a usage pattern of a record/playback apparatus 100;
FIG. 2 is a block diagram showing the structure of the record/playback apparatus 100;
FIG. 3 is a block diagram showing the structure of a content storage unit 101;
FIG. 4 shows the data structure of a presetting table T100 stored in a presetting storage unit 102;
FIG. 5 shows the data structure of an index table T101 stored in an index storage unit 104;
FIG. 6 is a flowchart showing recording period extension processing;
FIG. 7 is a flowchart showing preset recording processing;
FIG. 8 is a flowchart showing silence detection processing;
FIG. 9 is a flowchart showingindex registrationprocessing;
FIG. 10 is a flowchart showing thumbnail-list display processing;
FIG. 11 is a flowchart showing thumbnail generation processing;
FIG. 12 is a block diagram showing the structure of a record/playback apparatus 100A;
FIG. 13 shows the data structure of an index table T200 stored in an index storage unit 104A;
FIG. 14 shows the structure of a thumbnail-list screen M100;
FIG. 15 is a flowchart showing preset recording processing;
FIG. 16 is a flowchart showing first index registration processing;
FIG. 17 is a flowchart showing thumbnail generation processing, and continued to FIG. 18;
FIG. 18 is the flowchart showing thumbnail generation processing, and continued from FIG. 17;
FIG. 19A is a front view of a monitor 20 displaying a thumbnail-list, and FIG. 19B is a rear view of the monitor 20;
FIG. 20A is a right side view of the monitor 20, and FIG. 20B is a left side view of the monitor 20;
FIG. 21A is a top view of the monitor 20, and FIG. 21B is a bottom view of the monitor 20;
FIG. 22 is a view illustrating a screen displayed on the monitor 20;
FIG. 23 is a front view of the monitor 20 displaying a thumbnail-list;
FIG. 24 is a view illustrating a screen displayed on the monitor 20;
FIG. 25 is a front view of the monitor 20 displaying a thumbnail-list;
FIG. 26 is a view illustrating a screen displayed on the monitor 20;
FIG. 27 is a front view of the monitor 20 displaying a thumbnail-list;
FIG. 28 is a view illustrating a screen displayed on the monitor 20;
FIG 29 is a front view of the monitor 20 displaying a thumbnail-list;
FIG. 30 is a view illustrating a screen displayed on the monitor 20;
FIG. 31 a front view of the monitor 20 displaying a thumbnail-list;
FIG. 32 is a view illustrating a screen displayed on the monitor 20;
FIG. 33 is a front view of the monitor 20 displaying a thumbnail-list;
FIG. 34 is a view illustrating a screen displayed on the monitor 20;
FIG. 35 is a front view of the monitor 20 displaying a thumbnail-list;
FIG. 36 is a view illustrating a screen displayed on the monitor 20;
FIG. 37 is a block diagram showing the structure of a record/playback apparatus 100B;
FIG. 38 shows the data structure of a rule table T300 stored in a rule storage unit 150B;
FIG. 39 is a flowchart showing program-start detection processing;
FIG. 40 is a flowchart showing first detection processing;
FIG. 41 is a flowchart showing second detection processing;
FIG. 42 is a flowchart showing third detection processing;
FIG. 43 is a flowchart showing fourth detection processing; and
FIG. 44 is a block diagram showing the structure of an LSI 1000.

### Best Mode for Carrying Out the Invention

### 1. Embodiment 1

Now, a description is given to a record/playback apparatus 100 consistent with an embodiment 1 of the present invention.

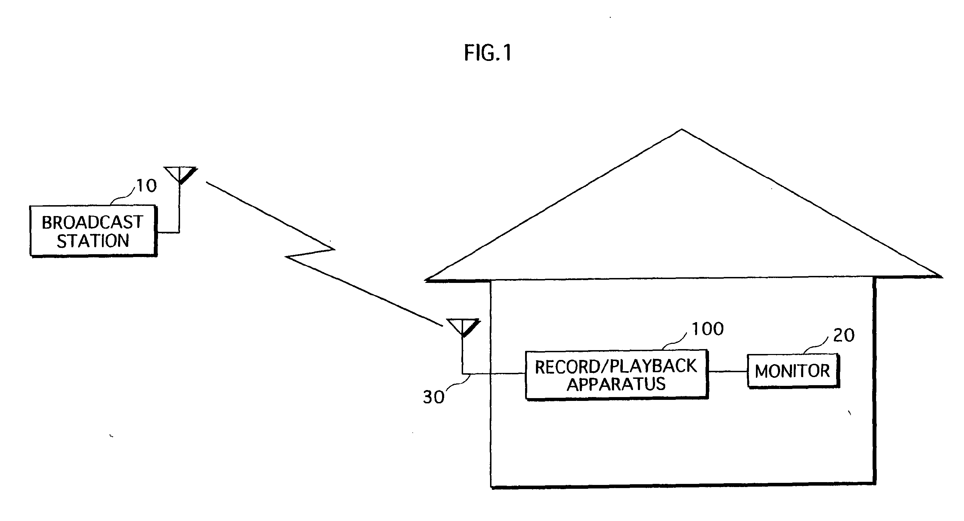

FIG. 1 shows a usage pattern of the record/playback apparatus 100.

A broadcast apparatus 10 transmits broadcast programs over broadcast waves along with data such as an Electric Program Guide (hereinafter, EPG) . The EPG shows, for each broadcast program, the title, broadcast start-time, broadcast end-time, a channel on which the broadcast program is broadcast, and some additional information about the program. Where applicable, the additional information includes extension information showing that an extension of the broadcast period is possible and also showing the maximum possible extension period.

Specifically, the record/playback apparatus 100 is a DVD recorder with a built-in HDD. In the case where an extension of a broadcast period is possible for any of the programs that are scheduled to be broadcast before the target broadcast program, the record/playback apparatus 100 records a target broadcast program after automatically extending the preset recording period for the extension period based on the extension information of the preceding program. The record/playback apparatus 100, in addition, performs indexing of the recorded target broadcast program, so that playback can be started from the position shown by the index. Furthermore, the record/playback apparatus 100 may be a DVD recorder or a HDD recorder.

A monitor 20 is connected to the record/playback apparatus 100, and outputs video and audio data received from the record/playback apparatus 100.

### 1.1 Structure of Record/Playback Apparatus 100

Now, a description is given to the structure of the record/playback apparatus 100.

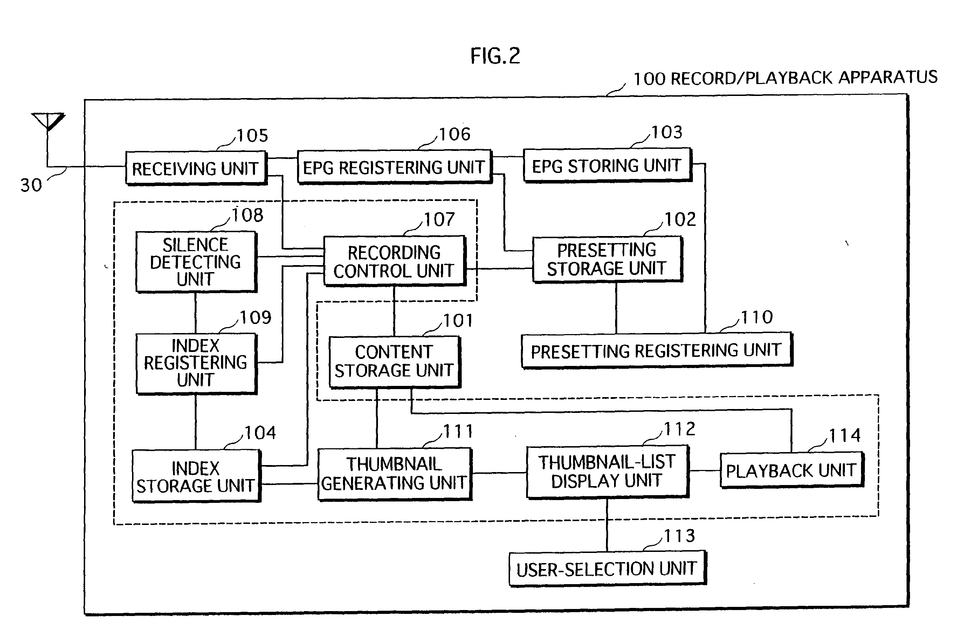

As shown in FIG. 2, the record/playback apparatus 100 is composed of a content storage unit 101, a presetting storage unit 102, an EPG storage unit 103, an index storage unit 104, a receiving unit 105, an EPG registering unit 106, a recording control unit 107, a silence detecting unit 108, an index registering unit 109, a presetting registering unit 110, a thumbnail generating unit 111, a thumbnail-list display unit 112, a user-selection unit 113, and a playback unit 114.

Specifically, the record/playback apparatus 100 is a computer system composed generally of a microprocessor, a ROM, a RAM, and a hard disk unit. The ROM or hard disk unit stores a computer program, and the microprocessor executes the program, thereby achieving the functions of the record/playback apparatus 100.

### (1) Content Storage Unit 101

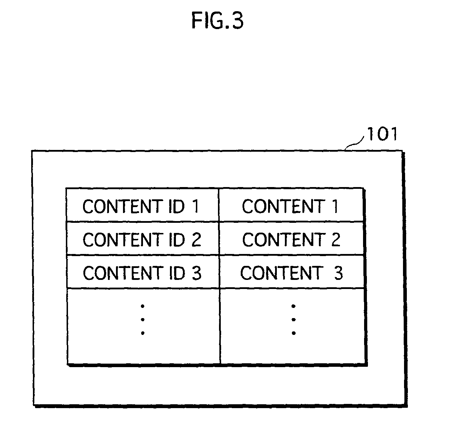

As exemplified in FIG. 3, the content storage unit 101 has a memory area for storing contents in correspondence with their content IDs.

A content ID uniquely identifies a content, whereas a content is a data set corresponding to at least one broadcast program recorded.

Each content stored in the content storage unit 101 is composed of video and audio data. The video data is in turn composed of a plurality of frames (still image) arranged in a time sequence. The audio data represents sound of each frame.

In this example, a content ID is assigned to a content by the record/playback apparatus 100 at the time of recording the content.

Generally, broadcast programs transmitted in compliance with the National Television System Committee (NTSC) system is composed of 30 frames per second, and the display time (the time elapsed from the recording start -time) of each frame is specified at about 33 ms intervals. For the simplicity sake, however, the display time of each frame is specified in seconds in the description of the present embodiment.

### (2) Presetting Storage Unit 102

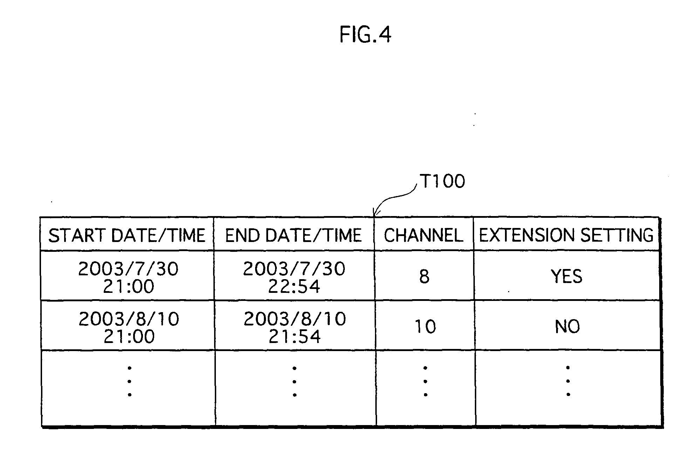

The presetting storage unit 102 stores a presetting table T100 as exemplified in FIG. 4.

The presetting table T100 is provided with a memory area for storing at least one piece of presetting information. Each piece of presetting information is composed of a start date/time and an end date/time, a channel, and an extension setting.

The start date/time is at which the recording of target broadcast program is to be started, whereas the end date/time is at which the recording is to be finished. The channel is on which the target broadcast program is scheduled be broadcast. The extension setting is information showing whether the preset recording period has been extended. When set to "YES", the extension setting indicates that the initially preset recording period has been extended, whereas "NO" indicates that the preset recording period is not extended.

### (3) EPG Storage Unit 103

The EPG storage unit 103 stores an EPG received from the broadcast apparatus 10.

### (4) Index Storage Unit 104

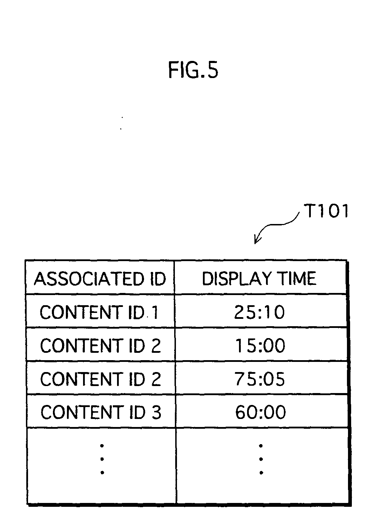

The index storage unit 104 stores an index table T101 as exemplified in FIG. 5.

The index table T101 is provided with a memory area for storing at least one index entry. Each index entry is composed of an associated ID and a display time.

The associated ID is a content ID identifying one of the contents stored in the content storage unit 101.

The display time shows a display time of a frame that is indexed after the recording starts.

### (5) Receiving Unit 105

The receiving unit 105 has an antenna 30, and receives broadcast waves from the broadcast apparatus 10 with the antenna 30. The receiving unit 105 separates data relating to broadcast programs from the received broadcast waves, thereby obtaining contents. The receiving unit 105 then outputs the contents to the recording control unit 107.

The receiving unit 105 in addition obtains an EPG from the received broadcast waves, and outputs the obtained EPG to the EPG registering unit 106.

It should be noted that the receiving unit 105 is described to obtain a content and output the obtained content to the recording control unit 107. However, this is for the sake of simplicity in illustrating the operations of the receiving unit 105. In practice, similarly to a conventional technique, the receiving unit 105 sequentially outputs to the recording control unit 107, data separated from the received broadcast wave.

### (6) EPG Registering Unit 106

On receiving an EPG from the receiving unit 105, the EPG registering unit 106 writes the received EPG into the EPG storage unit 103. In the case where there is an EPG already stored in the EPG storage unit 103, the EPG registering unit 106 overwrites the stored EPG with the EPG newly received from the receiving unit 105. In addition, the EPG registering unit 106 conducts the followingprocessing sequentiallyon eachpiece of presetting information stored in the presetting table T100 with the extension setting set to the "NO" condition.

Based on the start date/time and channel number shown by a piece of presetting information, the EPG registering unit 106 retrieves from the EPG stored in the EPG storage unit 103, the titles and additional information of all the preceding programs that are scheduled to be broadcast before the target broadcast program on the same channel and on the same date shown as the start date. The EPG registering unit 106 then retrieves every piece of extension information contained in the retrieved additional information. The extension information shows that an extension is possible, along with the possible extension period. The EPG registering unit 106 then calculates a new end date/time based on the extension periods shown by the retrieved pieces of extension information, and alters the originally set end date/time to the new end date/time. Thereafter, the EPG registering unit 106 alters the extension setting from "NO" to "YES".

With the above arrangement, the recording period preset for the target broadcast program is automatically extended when necessary.

### (7) Recording Control Unit 107

The recording control unit 107 is provided with a timer function for measuring a current time.

Furthermore, the recording control unit 107 records broadcast programs in accordance with a user instruction or with presetting information.

Using the timer function, the recording control unit 107 determines the timing of starting the preset recording in accordance with the presetting table T100.

The recording control unit 107 determines to start the preset recording when it is judged that the current date/time has reached the start date/time shown by any piece of the presetting information. On determining to start the preset recording, the recording control unit 107 further judges whether the extension setting has been made, with reference to the extension setting shown by a corresponding piece of presetting information.

On judging that the extension setting has been made, the recording control unit 107 outputs an extension message to the silence detecting unit 108. The extension message indicates that the recording is to be performed for an extended time period. In addition, the recording control unit 107 calculates a content ID and temporarily stores the calculated content ID. The recording control unit 107 digitizes a content passed from the receiving unit 105, and stores the digitized content to the content storage unit 101. At this time, the temporally stored content ID is also stored to the content storage unit 101, in correspondence with the content. Upon completion of the recording, the recording control unit 107 outputs to the silence detecting unit 108, a recording-end message indicating that the recording is completed.

On the other hand, on judging that the extension setting has not been made, the recording control unit 107 performs the preset recording according to a conventional technique. That is, the recording control unit 107 calculates a content ID, stores the content ID in correspondence with the content to the content storage unit 101. The display time of a first frame of the content is designated as an index entry, and thus recorded to the index table T101 held in the index storage unit 104. Since this technique is known in the art, no detailed description is given.

In addition, no description is given to a technique of recording a content in response to a user instruction, because such a technique is also known in the art.

It should be noted that the recording control unit 107 is described to record a content. However, this is for the sake of simplicity in illustrating the operations of the recording control unit 107. In practice, similarly to a conventional technique, the recording control unit 107 records a content to the content storage unit 101 by sequentially recording data received from the receiving unit 105 i.e. data separated from the broadcast wave.

### (8) Silence Detecting Unit 108

In response to an extension message received from the recording control unit 107, the silence detecting unit 108 detects silent frames one by one from the contents being recorded. A silent frame is a frame of which audio data is blow a predetermined threshold and detectable using a predetermined algorithm. When a silent frame F(n) is detected, the silence detecting unit 108 records the display time of the thus detected silent frame F(n), and calculates the time period of a segment present between the two silent frames F(n) and F(n-1), which was detected in the last detection, using the respective display times. The thus calculated segment period and the display time of the silent frame F(n) are outputted to the index registering unit 109.

Here, "n" is an integer equal to 2 or greater, and the silent frame F(1) is the first silent frame detected after receiving the extension message. When detecting the silent frame F(1), the silence detecting unit 108 stores the display time of the silent frame F(1) without the calculation of segment period.

The silence detecting unit 108 repeatedly performs the above operations until receiving a recording-end message from the recording control unit 107.

### (9) Index Registering unit 109

The index registering unit 109 has a memory area for storing a total CM period, which is a total of time periods of commercial messages (hereinafter "CMs") that are consecutively broadcast. The initial value of the total CM period is set to "0" seconds.

Further, the index registering unit 109 also has a memory area for storing the display times of each silent frame detected by the silence detecting unit 108.

When a segment period and the display time of a silent frame is received from the silence detecting unit 108, the index registering unit 109 records the received display time to the display time memory area, and judges whether a program broadcast for the segment period is a CM. In other words, it is judged whether a program broadcast during the segment period is detected as a CM. This judgment is made based on, for example, whether the segment period is 15 or 30 seconds long. When jugged in the affirmative, the index registering unit 109 detects the program broadcast for the segment period as a CM.

On judging that the broadcast program is a CM, the index registering unit 109 adds the segment period received from the silence detecting unit 108 to the total CM period currently stored in the CM period memory area, thereby updating the total CM period. Thereafter, the index registering unit 109 enters a wait state for the next input of a segment period and the display time of a silent frame.

When judging that the broadcast program is not a CM, the index registering unit 109 further judges whether the total CM period stored in the CM period memory exceeds a predetermined threshold (300 seconds, for example).

On judging that the total CM period exceeds the threshold, the index registering unit 109 obtains from the recording control unit 107 the content ID of the content being recorded. The index registering unit 109 then obtains from the display time memory area, the display time received from the silence detecting unit 108 immediately before the most-recently received display time (the display time read herein is referred to as a "target display time"). The index registering unit 109 designates the obtained target display time as a display time of a start frame of the next broadcast program (i.e. the target broadcast program). Then, the index registering unit 109 generates an index entry composed of the obtained content ID and the target display time, and records the index entry to the index table T101. Suppose, for example, the index registering unit 109 receives from the silence detecting unit 108, a segment period and the display time of a silent frame F(n) . On judging that a program broadcast between the silent frames F(n-1) and F(n) is not a CM, the index registering unit 109 reads the target display time from the display time memory area. The target display time is the display time received immediately before the most-recently received display time (i. e. reads the display time of silent frame F(n-1)).

On judging that the total CM period does not exceed the threshold, the index registering unit 109 resets the total CM period to the initial value, and enters the wait state for the next input of a segment period and the display time of a silent frame.

Suppose that ten 30-second CMs are broadcast between two broadcast programs. Further, in each broadcast program, there are three time slots during which four 15-second CMs are broadcast.

In other words, the total period of CMs broadcast between the two broadcast programs (five minutes, in the above example) is longer than the total period of CMs consecutively broadcast within one broadcast program (one minute in the above example) . Based on the above observation, when the total CM period exceeds a predetermined threshold, it is judged that a plurality of CMs detected was broadcast between two different broadcast programs. That is to say, when the total CM period exceeds a predetermined threshold, it is judged that a transition to a next broadcast program has taken place. This arrangement ensures to index the target broadcast program.

In the above CM judgment, the threshold (i.e. 300 seconds) that is compared with the total CM period is an integral multiple of the reference value (i.e. 15 or 30 seconds) that is compared with a segment period. Yet, the threshold may be any value other than an integral multiple of the reference value. Furthermore, when a segment period is equal to the reference value of 15 or 30 seconds, it is judged that a program broadcast during the segment period is a CM. Yet, the judgment may be made in other manners. For example, the reference value may be set specifically to 15 seconds. When a segment period is an integral multiple of the reference value and is not exceeding the maximum period of a CM broadcast (30 second, for example), a program broadcast during the segment period is judged as a CM. In this case, the threshold (300 seconds) compared with a CM period may also be an integral multiple of the reference value. Yet, the threshold needs to be longer than the maximum CM period.

### (10) Presetting Registering Unit 110

The presetting registering unit 110 receives user input of record presetting, including the start date/time, end date/time, and channel number of a target broadcast program. Upon receipt of the user input, the presetting registering unit 110 performs the following.

Based on the start date/time and channel number received from the user, the presetting registering unit 110 retrieves from the EPG stored in the EPG storage unit 103, the titles and additional information of all the preceding programs that are scheduled be broadcast before the target broadcast program on the same channel. The presetting registering unit 110 then detects every piece of extension information contained in the retrieved additional information.

When detecting extension information, the presetting registering unit 110 calculates an end date/time using the extension periods shown by the obtained pieces of extension information. Thereafter, the presetting registering unit 106 generates a piece of presetting information composed of the channel number and start date/time as received from the user, and the thus calculated end date/time. Here, the extension setting is set to "YES". The thus generated presetting information is then written to the presetting table T100.

When no extension information is detected, the presetting registering unit 110 generates a piece of presetting information that is composed of the start date/time, end date/time, channel number as received from the user. Here, the extension setting is set to "NO". The thus generated presetting information is then written to the presetting table T100.

### (11) Thumbnail Generating Unit 111

On receiving a list-generating message from the thumbnail-list display unit 112, the thumbnail generating unit 111 performs the following processing sequentially on each index entry contained in the index table T101.

The thumbnail generating unit 111 first obtains from the content storage unit 101, a content that is identified by the associated ID contained in a current index entry. The thumbnail generating unit 111 then obtains a frame corresponding to a display time that is a predetermined time period after the display time shown by the index entry (for example, the third frame in the time sequence from the one corresponding to the display time shown by the index entry). The thumbnail generating unit 111 then generates a thumbnail image of the thus obtained frame as a representative still image, and establishes a correspondence between the generated thumbnail image and the index entry. The above operations are repeated for each index entry.

The thumbnail generating unit 111 then outputs to the thumbnail-list display unit 112, all the generated thumbnail images each paired with a corresponding index entry.

In the embodiment 1, a thumbnail image is generated from a frame corresponding to a display time that is a predetermined time period after the display time shown by an index entry. This arrangement serves to avoid generating a thumbnail image from a frame that substantially contains no images. This is because the frame directly corresponding to a display time shown by the index entry is a silent frame. A thumbnail image generated from such a silent frame substantially displays nothing and thus is not suitable as a representative still image.

### (12) Thumbnail-List Display Unit 112

The thumbnail-list display unit 112 receives a list-generating message from the user-selection unit 113, and passes the received list-generating message to the thumbnail generating unit 111.

On receiving pairs of a thumbnail image and a corresponding index entry from the thumbnail generating unit 111, the thumbnail-list display unit 112 displays the received thumbnail images in list form on the monitor 20.

Furthermore, the thumbnail-list display unit 112 receives from the user-selection unit 113, information showing a thumbnail image selected by a user from among the displayed thumbnail images. On receiving the information, the thumbnail-list display unit 112 outputs an index entry corresponding to the selected thumbnail image.

### (13) User-Selection Unit 113

The user-selection unit 113 receives a user request for thumbnail image display, and in response outputs a list-generating message to the thumbnail-list display unit 112.

Furthermore, after the thumbnail-list display unit 112 displays the thumbnail images, the user-selection unit 113 selects one of the displayed thumbnail images in accordance with user operations, and informs the thumbnail-list display unit 112 about the selected thumbnail image.

### (14) Playback Unit 114

On receiving an index entry from the thumbnail-list display unit 112, the playback unit 114 obtains from the content storage unit 101, a content identified by the associated ID shown by the received index entry. Using the display time shown by the received index entry, the playback unit 114 searches the content so as to obtain a frame corresponding to the selected thumbnail image, and plays back the content starting from the thus obtained frame. Specifically, the playback unit 114 searches the content so as to obtain, as a frame corresponding to the thumbnail image, a frame that is after a predetermined time from the display time (for example, a third frame from a frame corresponding to the display time shown by the index entry).

With this arrangement, the playback unit 114 plays back the content starting from the frame corresponding to the selected thumbnail image.

In the above description, the playback unit 114 plays back the content starting from the frame corresponding to the selected thumbnail image, but is not limited to such. For example, the playback unit 114 may retrieve the frame corresponding to the display time, and starts playback of the content from the retrieved frame. With this arrangement, the playback unit 114 plays back the content starting from the indexed position.

### 1.2 Operations of Record/Playback Apparatus 100

Hereinafter, a description is given to the operations performed by the record/playback apparatus 100.

### (1) Recording Period Extension

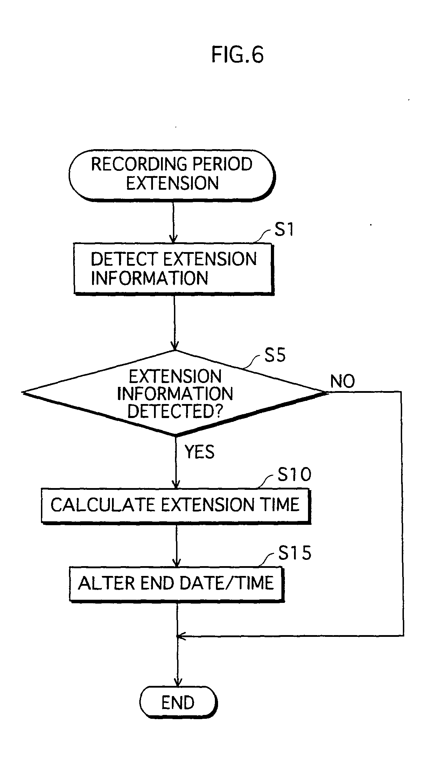

With reference to a flowchart shown in FIG. 6, a description is given to the processing performed by the EPG registering unit 106 for extension of a preset recording period. The recording period extension is performed at the time of obtaining an EPG, sequentially on each piece of presetting information that is contained in the presetting table T100 with its extension setting set to "NO".

Based on the start date/time and channel number shown by a current piece of presetting information, the EPG registering unit 106 retrieves from the EPG stored in the EPG storage unit 103, the titles and additional information of all the preceding programs that are scheduled be broadcast before the target broadcast program on the same channel and on the same date shown as the start date. The EPG registering unit 106 then detects every piece of extension information contained in the retrieved additional information (step S1). The EPG registering unit 106 then judges whether any piece of extension information is detected (S5). On judging in the affirmative, the EPG registering unit 106 calculates a new end date/time using the extension periods shown by the detected pieces of extension information (step S10). The EPG registering unit 106 then updates the presetting table T100 by altering the originally set end date/time to the new end date/time as well as altering the extension setting from "NO" to "YES" (step S15).

On judging in the step S5 that no extension information is detected, the EPG registering unit 106 conducts no processing on the current piece of presetting information.

The EPG registering unit 106 performs the above steps sequentially on each piece of presetting information that is contained in the presetting table T100 with the extension setting "NO".

The processing of extending a preset recording period is also performed by the presetting registering unit 110. The processing steps performed by the presetting registering unit 110 are basically similar to the above steps except the following.

In the step S1, the presetting registering unit 110 detects extension information contained in the EPG stored in the EPG storage unit 103, and this detection is performed based on the start date/time and channel number received from a user. In the step S15, the presetting registering unit 110 generates a piece of presetting information that is composed of the start date/time and channel number received from the user, in addition to the calculated end date/time. Here, the extension setting is set to "NO". Thereafter, an additional step is performed to store the thus generated presetting information to the presetting table T100.

### (2) Preset Recording

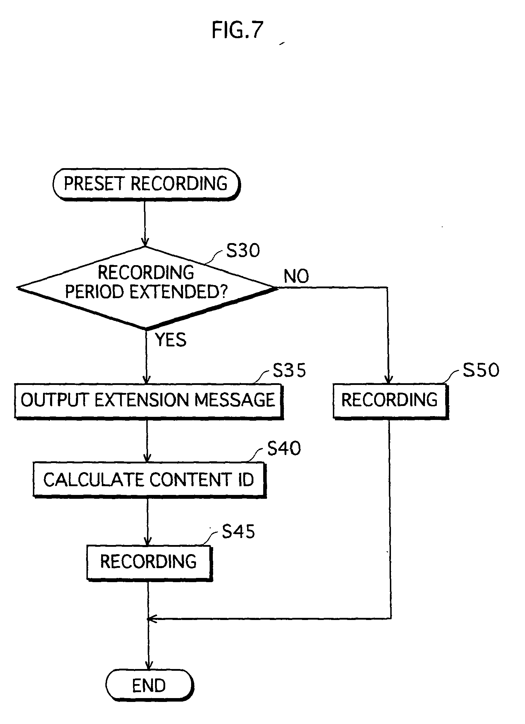

With reference to a flowchart shown in FIG. 7, a description is given to the processing performed by the recording control unit 107 to record a target broadcast program according to a piece of presetting information.

First of all, the recording control unit 107 judges, based on the piece of presetting information, whether a recording period preset for the target broadcast program is extended (step S30).

On judging in the step S30 that no extension has been made, the recording control unit 107 performs the preset recording according to a conventional technique. (step S50).

On the other hand, on judging in the step S30 that an extension is made, the recording control unit 107 outputs an extension message to the silence detecting unit 108 (step S35), calculates and temporarily stores a content ID (step S40) . The recording control unit 107 then records the target broadcast program, and outputs a recording-end message to the silence detecting unit 108 upon completion of the recording (step S45).

### (3) Silence Detection

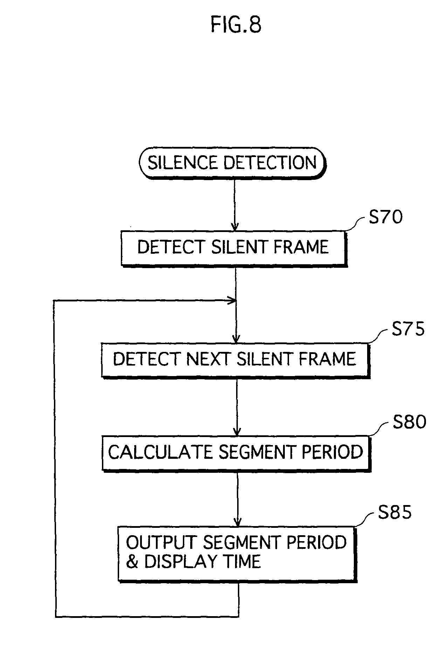

With reference to a flowchart shown in FIG. 8, a description is given to the processing performed by the silence detecting unit 108 to detect silent frames. The silence detection is performed during the time between the reception of an extension message and a recording-end message.

Upon receiving an extension message, the silence detecting unit 108 detects from the content a first silent frame in the time sequence, and stores the display time of the detected silent frame (step S70).

The silence detecting unit 108 then detects a next silent frame in the time sequence, and stores the display time of the detected silent frame (step S75). The silence detecting unit 108 calculates a period of segment between the display times of the two silent frames, i.e. the silent frames most-recently detected and the silent frame detected immediately previously (step S80), and outputs the calculated segment period and the display time of the most-recently detected silent frame detected (step S85). The processing then returns to the step S75 to detect a next silent frame.

The silence detecting unit 108 repeatedly performs the above operations after receiving an extension message and until receiving a recording-end message from the recording control unit 107.

### (4) Index Registration

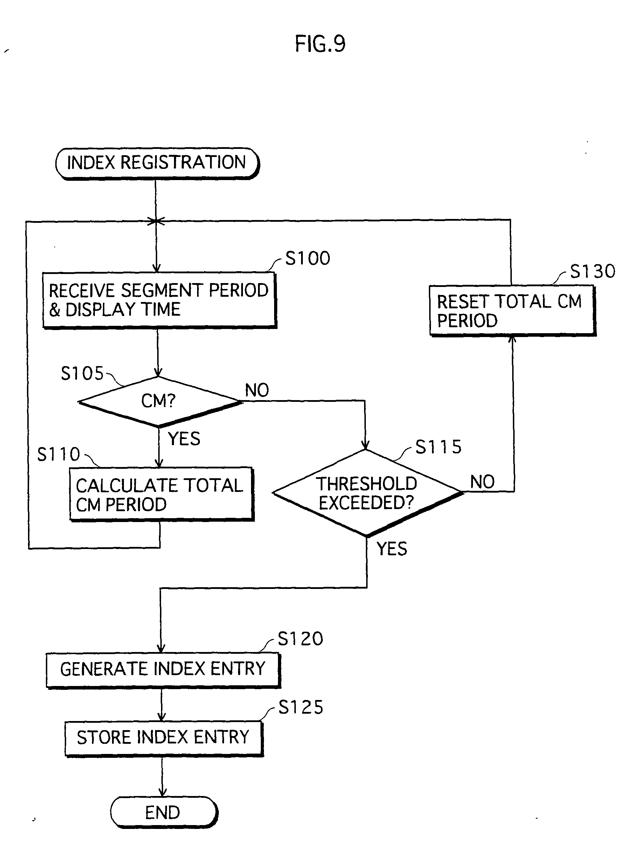

With reference to a flowchart shown in FIG. 9, a description is given to the processing performed for index registration.

When a segment period and the display time of a silent frame is received from the silence detecting unit 108 (step S100), the index registering unit 109 judges whether a programbroadcast during the segment period is a CM (step 5105).

On judging in the step S105 that the broadcast program is a CM, the index registering unit 109 adds the received segment period to the total CM period currently stored in the CM period memory area, thereby updating the CM period (step S110). The processing then goes back to the step S100.

On the other hand, when judging in the step S105 that the broadcast program is not a CM, the index registering unit 109 further judges whether the CM period exceeds a predetermined threshold (step S115).

On judging in the step S115 that the CM period exceeds the threshold, the index registering unit 109 obtains the content ID of the content being recorded from the recording control unit 107, and reads the target display time from the display time memory area. The index registering unit 109 then generates an index entry using the obtained content ID and target display time (step S120), and writes the thus generated index entry to the index table T101 (step 5125).

On the other hand, on judging in the step S115 that the CM period does not exceed the threshold, the index registering unit 109 resets the CM period to the initial value (step S130) . The processing then goes back to the step S100.

Note that during the recording in the case where the extension setting is made, the index registering unit 109 may receive another segment period and display time from the silence detecting unit 108 after registering one index entry. In response, the index registering unit 109 performs the steps S100 and onward. As a result, a plurality of index entries is registered.

### (5) Thumbnail-List Display

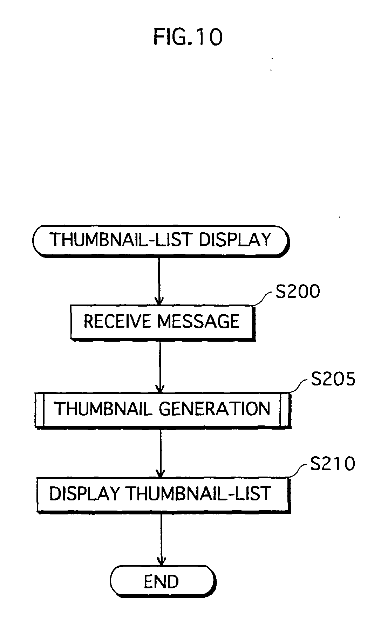

With reference to a flowchart shown in FIG. 10, a description is given to the processing performed for displaying the thumbnail images in list form.

On receiving a list-generating message from the user-selection unit 113, the thumbnail-list display unit 112 outputs the received list-generating message to the thumbnail generating unit 111 (step 5200).

The thumbnail generating unit 111 performs the processing of generating thumbnail images (step S205).

The thumbnail-list display unit 112 then receives all the pairs of thumbnail images and corresponding index entries, and displays the received thumbnail images in list form (step 5210) .

### (6) Thumbnail Generation

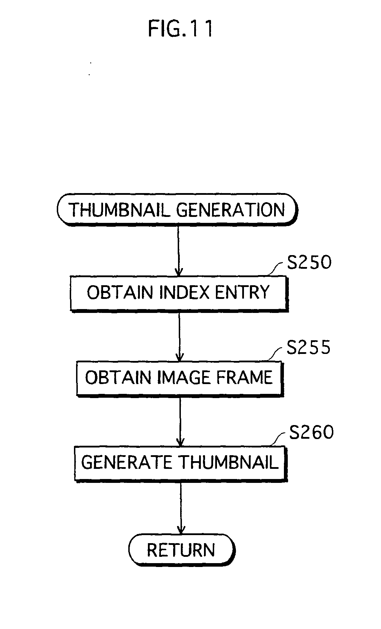

With reference to a flowchart shown in FIG. 11, a description is given to the above processing of generating thumbnail images performed in the thumbnail-list display processing.

The thumbnail generating unit 111 obtains the index entries one by one from the index table T101 (step S250).

Next, the thumbnail generating unit 111 obtains, from the content identified by the association ID shown by the obtained index entry, a frame corresponding to a display time that is a predetermined time period after the display time shown by a current index entry (S255). The thumbnail generating unit 111 then generates a thumbnail image from the thus obtained frame, and establishes a correspondence between the generated thumbnail image and the index entry obtained in the step S250 (step S260).

The thumbnail generating unit 111 repeats the steps S250-S260 for each index entry contained in the index table T101.

### 1.3 Recapitulation of Embodiment 1

As described above, the embodiment 1 takes advantage of the observation that the total period of CMs broadcast between two successive programs is longer than the total period of CMs consecutively broadcast within one broadcast program. This arrangement ensures that the target broadcast program to be indexed. As a result, simplified user operations allows to locate the start position of the target broadcast program.

Furthermore, with the use of an index entry, a thumbnail image of a target broadcast program may be generated and displayed.

### 1.4 Modifications of Embodiment 1

Although the present invention has been described by way of the embodiment 1 above, it is naturally appreciated that the present invention is not limited to the specific embodiment above. Various modifications including the following still fall within the scope of the present invention.
(1) Although an EPG is received from a broadcast apparatus in the above embodiment, it is applicable that an EPG is received over the Internet.
(2) The generation of index entry may be performed after recording the entire target broadcast program. More specifically, when an end date/time shown by apiece of presetting information is reached, the record/playback apparatus terminates the recording of broadcast programs, and then generates and stores an index entry, thereby completing the preset recording processing.
   Alternatively, the generation of index entry may be performed after recording the entire target broadcast program and in response to a user instruction.
(3) The CM detection may be carried out based on the transition of audio modes, such as transitions from stereophonic sound to monophonic sound, and vice versa.
(4) Also applicable is a broadcast program recording apparatus for receiving and recording a target broadcast program which is preset to be recorded. The broadcast program recording apparatus: stores in advance a scheduled broadcast time of the target broadcast program; receives an electronic program guide showing a broadcast schedule of broadcast programs; receives the broadcast programs; detects, from the received electronic program guide, extension information showing that a broadcast program scheduled to be broadcast immediately before the target broadcast program will be broadcast for an extended time period; calculates, if the extension information is detected, the length of pieces of CM data consecutively broadcast after the scheduled broadcast time of the target broadcast program; judges whether the thus calculated length is equal to or longer than a reference value; determines, if the length is equal to or longer than the reference value, a program broadcast subsequently to the pieces of CM data as the target broadcast program; stores the start position of the target broadcast program; and starts recording the target broadcast program from the start position.
(5) In the above embodiment, the silence detecting unit 108 and the index registering unit 109 operate when the extension setting is set to "YES". Alternatively, the two units may operate also when the extension setting is set to "NO".
(6) In the above embodiment, the index registering unit 109 stores an index entry when the total CM period exceeds the threshold. Alternatively, however, the following is possible.
   The index registering unit 109 stores an index entry corresponding to a first frame of a recorded content to the index table T101 held in the index storage unit 104. When the total CM period exceeds the threshold, the index registering unit 109 additionally stores another index entry to the index table T101.
(7) In the above embodiment, the thumbnail generating unit 111 generates a thumbnail image using a frame specified by a display time that is a predetermined time period after the display time shown by the index entry. Alternatively, however, the thumbnail generating unit 111 may generate a thumbnail image using a frame directly specified by the display time shown by the index entry.
(8) In the above embodiment, it is also applicable that a single CM constitutes a piece of segment data. That is, when the total period of pieces of consecutively broadcast segment data (i.e. the total CM period) exceeds a threshold, it is judged that the pieces of segment data are a group of CMs consecutively broadcast between two different broadcast programs. By detecting such consecutive pieces of segment data, the record/playback apparatus is capable of judging that a transition from one broadcast program to another has taken place. Thus, the target broadcast program is duly indexed.

### 2. EMBODIMENT 2

Now, description is given to a record/playback apparatus 100A consistent with an embodiment 2 of the present invention.

Similarly to the record/playback apparatus 100 of the embodiment 1, the record/playback apparatus 100A receives EPGs and broadcast programs from the broadcast apparatus 10. Furthermore, the record/playback apparatus 100A is connected to the monitor 20 described above in the embodiment 1. An example of the monitor 20 includes a liquid crystal monitor having a liquid crystal display screen.

### 2.1 Structure of Record/Playback Apparatus 100A

Now, a description is given to the structure of the record/playback apparatus 100A.

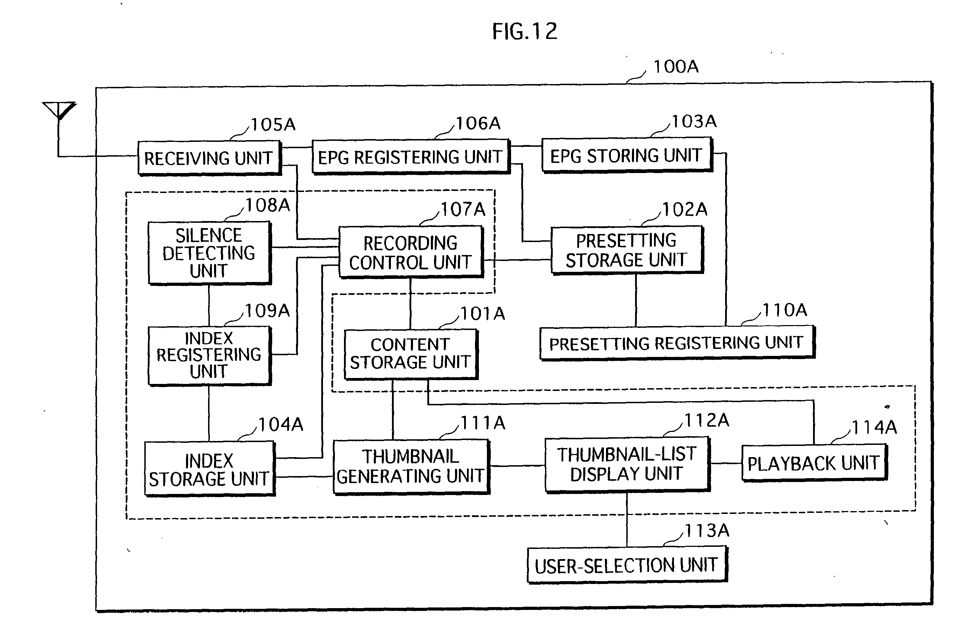

As shown in FIG. 12, the record/playback apparatus 100A is composed of a content storage unit 101A, a presetting storage unit 102A, an EPG storage unit 103A, an index storage unit 104A, a receiving unit 105A, an EPG registering unit 106A, a recording control unit 107A, a silence detecting unit 108A, an index registering unit 109A, a presetting registering unit 110A, a thumbnail generating unit 111A, a thumbnail-list display unit 112A, a user-selection unit 113A, and a playback unit 114A.

Specifically, the record/playback apparatus 100A is a computer system composed generally of a microprocessor, a ROM, a RAM, and a hard disk unit. The ROM stores a computer program, and the microprocessor executes the program, thereby achieving the functions of the record/playback apparatus 100A.

### (1) Content Storage Unit 101A

The content storage unit 101A is basically similar to the content storage unit 101, and thus a description thereof is omitted.

### (2) Presetting Storage Unit 102A

The presetting storage unit 102A is basically similar to the presetting storage unit 102, and thus description thereof is omitted. In addition, similarly to the first embodiment, each piece of presetting information in this embodiment is composed of a start date/time, an end date/time, a channel, and an extension setting.

### (3) EPG Storage Unit 103A

The EPG storage unit 103A is basically similar to the EPG storage unit 103, and thus a description thereof is omitted.

### (4) Index Storage Unit 104A

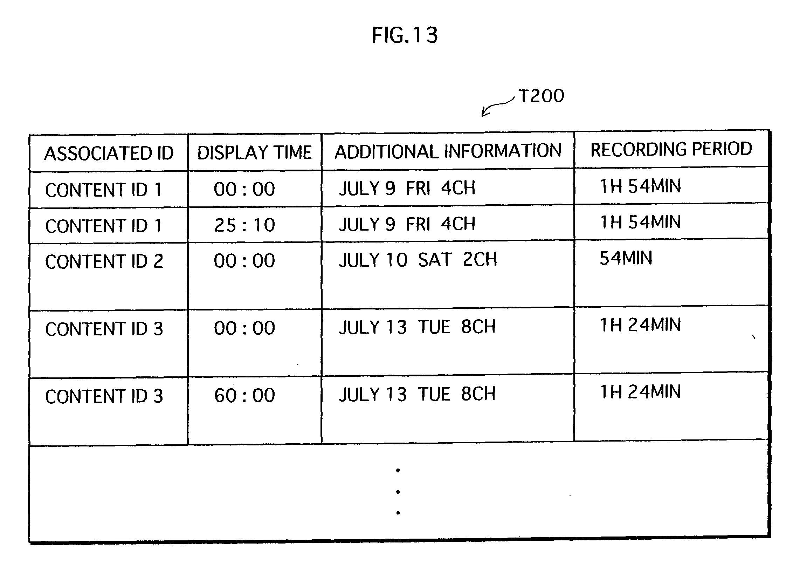

The index storage unit 104A stores an index table T200 as exemplified in FIG. 13.

The index table T200 is provided with a memory area for storing at least one index entry. Each index entry is composed of an associated ID, a display time, additional information, and a recording period.

The associated ID is a content ID identifying a corresponding one of the contents stored in the content storage unit 101A.

The display time shows a display time of a frame that is indexed after the recording starts.

Each piece of additional information is composed of a date, day, and time at which a corresponding content is recorded, and a channel number on which the content is broadcast.

The recording period is a length of time elapsed from the start to end of the recording.

### (5) Receiving Unit 105A

The receiving unit 105A is basically similar to the receiving unit 105, and thus a description thereof is omitted.

### (6) EPG Registering Unit 106A

The EPG registering unit 106A is basically similar to the EPG registering unit 106, and thus a description thereof is omitted.

### (7) Recording Control Unit 107A

The recording control unit 107A records broadcast programs in accordance with a user instruction or with presetting information.

The recording control unit 107A is provided with a timer function for measuring a current time, as well as a calendar function for managing days of a week. At the time of recording a broadcast program, the recording control unit 107A obtains a recording date, day, and time, with the use of the timer and calendar functions. The recording control unit 107A also obtains a channel number on which the broadcast program being recorded is broadcast. The recording control unit 107A then generates a piece of additional information composed of the channel number and the recording date, day, and time, and temporarily stores the generated piece of additional information.

With the use of the timer function, the recording control unit 107A determines whether to start the preset recording in accordance with the presetting information stored in the presetting storage unit 102A.

The recording control unit 107A determines to start the preset recording when it is judged that the current time has reached the start date/time shown by any piece of presetting information. On determining to start the preset recording, the recording control unit 107A calculates the length of time period for performing the recording, based on the start date/time and end date/time shown by the piece of presetting information, and temporarily stores the thus calculated time period as a recording period. Suppose, for example, the start time is "21:00" whereas the end time is "22:54", the recording period is calculated to be "1 hour and 54 minutes".

Next, the recording control unit 107A further judges whether an originally set recording period has been extended, with reference to the extension setting shown by the corresponding piece of presetting information.

On judging that the recording period is extended, the recording control unit 107A outputs an extension message to the silence detecting unit 108A. The extension message indicates that the recording is to be performed for an extended time period.

Then, the recording control unit 107A calculates a content ID, and temporarily stores the calculated content ID.

In addition, the recording control unit 107A outputs an index registration command to the index registering unit 109A. The index registration command instructs to store an index entry corresponding to the first frame of a recorded content.

The recording control unit 107A digitizes a broadcast program passed from the receiving unit 105A, and stores the digitized data as a content to the content storage unit 101A. At this time, the temporally stored content ID is also stored to the content storage unit 101A in correspondence with the content. Upon completion of the recording, the recording control unit 107A outputs to the silence detecting unit 108A, a recording-end message indicating that the recording is completed.

On the other hand, on judging that the recording period is not extended, the recording control unit 107A performs the preset recording according to a conventional technique. That is, the recording control unit 107A calculates a content ID, stores a content to the content storage unit 101A in correspondence with the content ID. An index entry composed of the content ID, the display time of the first frame of the recorded content, the additional information, and the recording period is generated and recorded to the index table T200 held in the index storage unit 104A. Since this technique is known in the art, no detailed description is given.

Further, no detailed description is given to a technique of recording a content in response to a user instruction, since it is also known in the art. When recording a content in response to a user instruction, the recording control unit 107A calculates a content ID, and stores a broadcast program to the content storage unit 101A in correspondence with the calculated content ID. The recording control unit 107A measures the time period elapsed from the recording start to the recording end, and designates the measured time period as the recording time period. After completing the recording, the recording control unit 107A generates an index entry composed of the content ID, the display time of the first frame of the recorded content, the additional information, and the recording period, and stores the generated index entry to the index table T200 held in the index storage unit 104A.

It should be noted that the recording control unit 107A is described to record a content for the sake of simplicity in illustrating the operations of the recording control unit 107A. Inpractice, similarly to a conventional technique, the recording control unit 107A records a content to the content storage unit 101A by sequentially recording data received from the receiving unit 105A i.e. data separated from the broadcast wave.

### (8) Silence Detecting Unit 108A

The silence detecting unit 108A is basically similar to the silence detecting unit 108, and thus a description thereof is omitted.

### (9) Index Registering Unit 109A

The index registering unit 109A has a memory area for storing a total CM period, which is a total of time periods of CMs that are consecutively broadcast. The initial value of the total CM period is set to "0" seconds.

Further, the index registering unit 109A also has a memory area for sequentially storing the display times of each silent frame detected by the silence detecting unit 108A.

On receiving an index registration command from the recording control unit 107A, the index registering unit 109A obtains the content ID, additional information, and recording period of the content from the recording control unit 107A. The index registering unit 109A then generates an index entry composed of the obtained content ID, additional information, and the recording period, as well as the display time "0:00", which is the display time of the first frame of the recorded content. The index registering unit 109A records the thus generated index entry to the index table T200.

On receiving a segment period and the display time of a silent frame from the silence detecting unit 108A, the index registering unit 109A stores the received display time to the display time memory area, and judges whether a program broadcast during the received segment period is a CM. This judgment is made based on, for example, whether the segment period is 15 or 30 seconds long.

On judging that the broadcast program is a CM, the index registering unit 109A adds the received segment period to the total CM period currently stored in the CM period memory area, thereby updating the total CM period. Thereafter, the index registering unit 109A enters a wait state for the next input of a segment period and the display time of a silent frame.

When judging that the broadcast program is not a CM, the index registering unit 109 further judges whether the total CM period stored in the CM period memory exceeds a predetermined threshold (300 seconds, for example).

On judging that the total CM period exceeds the threshold, the index registering unit 109A obtains a content ID from the recording control unit 107A. The index registering unit 109A then reads a target display time from the display time memory area. The index registering unit 109A designates the obtained target display time as the display time of the start frame of the next broadcast program (i.e. the target broadcast program) . Then, the index registering unit 109A generates an index entry composed of the obtained content ID and the target display time, and records the index entry to the index table T200.

On the other hand, on judging that the total CM period does not exceed the threshold, the index registering unit 109A resets the total CM period to the initial value, and enters the wait state for the next input of a segment period and the display time of a silent frame.

With the above arrangement, when the recording period is extended, the index registering unit 109A generates two index entries for the same content, one index showing the display time corresponding to the recording start and the other showing the display time corresponding to a program transition. Consequently, the content is indexed without fail, even if no programbroadcast before the target broadcast program is extended and thus the target broadcast program is broadcast on time as scheduled.

As shown in FIG. 13, for example, the index table T200 contains two index entries both for the same content identified by the content ID "1". The two index entries show the display times "00:00" and "25:10". This indicates that the content identified by the content ID "1" is recorded for an extended time period. Furthermore, for the content identified by the content ID "2", the index table T200 contains one index entry showing the display time "00:00". This indicates that the content identified by the content ID "2" is recorded with no extension of the recording time period.

In the above CM judgment, the threshold (i.e. 300 seconds) that is compared with the total CM period is an integral multiple of the reference value (i.e. 15 or 30 seconds) that is compared with a segment period. Yet, the threshold may be any value other than an integral multiple of the reference value. Furthermore, when a segment period is equal to the reference value of 15 or 30 seconds, it is judged that a program broadcast during the segment period is a CM. Yet, the judgment may be made in other manners. For example, the reference value may be set specifically to 15 seconds. When a segment period is an integral multiple of the reference value and is not exceeding the maximum period of a CM broadcast (30 second, for example), a program broadcast during the segment period is judged as a CM. In this case, the threshold (300 seconds) compared with a CM period may also be an integral multiple of the reference value. Yet, the threshold needs to be longer than the maximum CM period. Furthermore, the CM period may be compared with the threshold to judge whether the CM period is equal to or greater than the threshold. When it is judged in the affirmative, the index entry may be generated and written.

### (10) Presetting Registering Unit 110A

The presetting registering unit 110A is basically similar to the presetting registering unit 110, and thus description thereof is omitted.

### (11) Thumbnail Generating Unit 111A

On receiving a list-generating message from the thumbnail-list display unit 112A, the thumbnail generating unit 111A performs the following processing.

The thumbnail generating unit 111A first obtains from the content storage unit 101A, a content that is identified by the associated ID contained in an index entry stored in the index table T200. The thumbnail generating unit 111A then obtains a frame corresponding to a display time that is a predetermined time period after the display time shown by the index entry (for example, the third frame in the time sequence from the one corresponding to the display time shown by the index entry). The thumbnail generating unit 111A then generates a thumbnail image of the thus obtained frame as a representative still image. The above operations are repeated for each index entry stored in the index table T200.

The thumbnail generating unit 111A then outputs to the thumbnail-list display unit 112A, all the generated thumbnail images each with a corresponding ding index entry.

Note that when the display time shown by the index entry is "00:00", a thumbnail image may be generated using a frame located at the position corresponding to the display time "00:00".

### (12) Thumbnail-List Display Unit 112A

The thumbnail-list display unit 112A stores list-display information used for generating a thumbnail-list screen M100. The thumbnail-list screen M100 is for displaying thumbnail images. A description of the thumbnail-list screen M100 will be given later.

The thumbnail-list display unit 112A receives a list-generating message from the user-selection unit 113A, and passes the received list-generating message to the thumbnail generating unit 111A.

On receiving pairs of a thumbnail image and a corresponding index entry from the thumbnail generating unit 111A, the thumbnail-list display unit 112A displays the thumbnail-list screen M100 on the monitor 20, thereby displaying the received thumbnail images. Specific operations for displaying the thumbnail-list screen M100 will be described later.

Furthermore, the thumbnail-list display unit 112A receives from the user-selection unit 113A, information about a thumbnail image selected by a user from among the displayed thumbnail images. On receipt of the selection information, the thumbnail-list display unit 112A obtains the selected thumbnail image and outputs an index entry corresponding to the selected thumbnail image.

### <Thumbnail-List Screen M100>

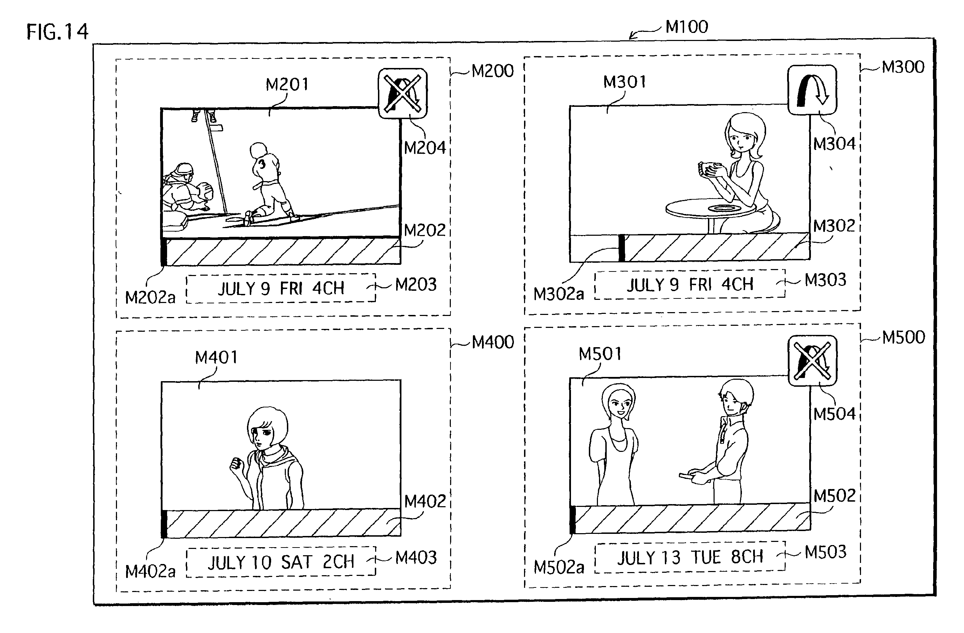

FIG. 14 shows one example of the thumbnail-list screen M100.

In this example, the thumbnail-list screen M100 displays four presentation sets M200, M300, M400, and M500, each composed of a representative thumbnail, a time bar, and a piece of display information. Furthermore, each presentation set additionally includes either a first icon or a second icon, or includes no icon. The presentation sets are arranged from the left to right and top to bottom in the stored order of corresponding index entries.

Each representative thumbnail is a thumbnail image received from the thumbnail generating unit 111A. The time bar indicates the position of a frame corresponding to the representative thumbnail in relation to the entire length of content. The display information is the additional information contained in the index entry of the content. The first icon indicates that the content is recorded by extending the preset recording period, and the content is to be played back starting from the position of the representative thumbnail (i.e. search playback). The second icon indicates that the content is recorded by extending the preset recording period, and the content is to be played back from the beginning of the recorded content (i.e. non-search playback) .

Each of the presentation sets M200, M300, and M400 is composed as follows.

The presentation set M200 is composed of the representative thumbnail M201, the time bar M202, the display information M203, and the second icon M204.

The presentation set M300 is composed of the representative thumbnail M301, the time bar M302, the display information M303, and the first icon M304.

The presentation set M400 is composed of the representative thumbnail M401, the time bar M402, and the display information M403.

The presentation set M500 is composed of the representative thumbnail M501, the time bar M502, the display information M503, and the second icon M504.

Each of position indicators M202a, M302a, M402a, and M502a displayed on a respective time bar visually indicates the position of a respective representative thumbnail in relation to the entire length of a respective content. In other words, each position indicator visually represents where in the content the representative thumbnail is located. For example, the position indicator M202a is displayed on the left margin of the time bar M202, which indicates that the representative thumbnail M201 is located at the beginning of the recorded content. The position indicator M302a is internally offset from both ends of the time bare M302, and corresponds to the position of the program transition recognized through the silent frame detection. In other words, the position indicator M302a indicates that the representative thumbnail M302 will be the playback start position. Note that the portion of the time bar being white visually represents how much of the recorded content will be skipped at the time of search playback.

On receiving pairs of a thumbnail image and a corresponding index entry from the thumbnail generating unit 111A, the thumbnail-list display unit 112A generates a presentation set from each thumbnail image and a corresponding index entry received, and displays the thumbnail-list screen M100 on the monitor 20, thereby displaying the generated presentation sets.

Hereinafter, a description is given to the generation of presentation sets. The thumbnail-list display unit 112A obtains a thumbnail image with a corresponding index entry, and judges whether any other index entries contain the same content ID as the content ID shown by the received index entry. On judging that the same content ID is contained, the thumbnail-list display unit 112A further judges whether the received index entry shows the display time "00:00".

On judging that the display time is "00:00", the thumbnail-list display unit 112A designates the obtained thumbnail image as a representative thumbnail, and the received additional information as display information. The thumbnail-list display unit 112A then generates a presentation set composed of the thus designated representative thumbnail, a time bar, the thus designated display information, and a second icon. The time bar generated herein displays a position indicator on the left margin thereof.

On the other hand, when judging that the display time is not "00:00", the thumbnail-list display unit 112A designates the obtained thumbnail image as a representative thumbnail, and the received additional information as display information. The thumbnail-list display unit 112A then generates a presentation set composed of the thus designated representative thumbnail, a time bar, the thus designated display information, and a first icon. The time bar is generated so as to indicate, with the position indicator, a position of a program transition detected through the silence detection. To this end, the entire recording period is taken as one and the proportion of a time period up to the display time is calculated. The position indicator is displayed on the time bar at a position corresponding to the calculated proportion.

On judging that the content ID shown by the received index entry is not present in any other index entries, the thumbnail-list display unit 112A designates the obtained thumbnail image as a representative thumbnail and designates the obtained additional information as display information. The thumbnail-list display unit 112A then generates a presentation set composed of the representative thumbnail, the display information, and a time bar. The time bar generated herein displays a position indicator on the left margin thereof.

The above operations are repeatedly performed on each pair of thumbnail image and index entry.

In the case of receiving five or more thumbnail images, the thumbnail generating unit 111A displays the presentation sets in groups of four on each screen display, and the screen display is switched to another with user operations.

### (13) User-Selection Unit 113A

The user-selection unit 113A receives a user request for displaying thumbnail images, and in response outputs a list-generating message to the thumbnail-list display unit112A.

Furthermore, after the thumbnail-list display unit 112A displays the representative thumbnails, the user-selection unit 113A selects one of the displayed representative thumbnails in accordance with user operations, and informs the thumbnail-list display unit 112A about the selected representative thumbnail.

### (14) Playback Unit 114A

On receiving an index entry from the thumbnail-list display unit 112A, the playback unit 114A obtains from the content storage unit 101A, a content identified by the associated ID shown by the received index entry. When the display time included in the received index entry is "00:00", the playback unit 114A obtains a frame that is located at the beginning of the recorded content, and plays back the content starting from the thus obtained frame. On the other hand, when the display time is other than "00 : 00", the playback unit 114A searches the recorded content using the display time so as to obtain a frame corresponding to the selected thumbnail image. The playback unit 114A then plays back the recorded content starting from the thus obtained frame. To be more specific, when the display time is other than "00.00", the playback unit 114A searches the content so as to obtain, as a frame corresponding to the selected thumbnail image, a frame located at a position that is after a predetermined time from the display time (for example, a third frame in the time sequence from the one located at the position corresponding to the display time shown by the index entry).

With this arrangement, the playback unit 114A plays back the recorded content from the beginning when the display time is "00:00". On the other hand, when the display time is other than "00:00", the playback unit 114A plays back the recorded content starting from a frame corresponding to the thumbnail image.

Although the playback unit 114A is described above as playing back the recorded content starting from a frame corresponding to the thumbnail image when the display time is other than "00:00", it is not limited to such. For example, the playback unit 114A may search the content for a frame located at a position corresponding to the display time, and start playback from the searched frame. With this arrangement, the playback unit 114A plays back the content starting from the indexed position when the display time is other than "00:00".

### 2.2 Operations of Record/Playback Apparatus 100A

Hereinafter, a description is given to the operations performed by the record/playback apparatus 100A.

Since the operations of recording period extension, silence detection, and thumbnail generation are basically similar to those described in the embodiment 1 above, no description is given here. Note that in the thumbnail generation, index entries are obtained from the index table T200.

### (1) Preset Recording

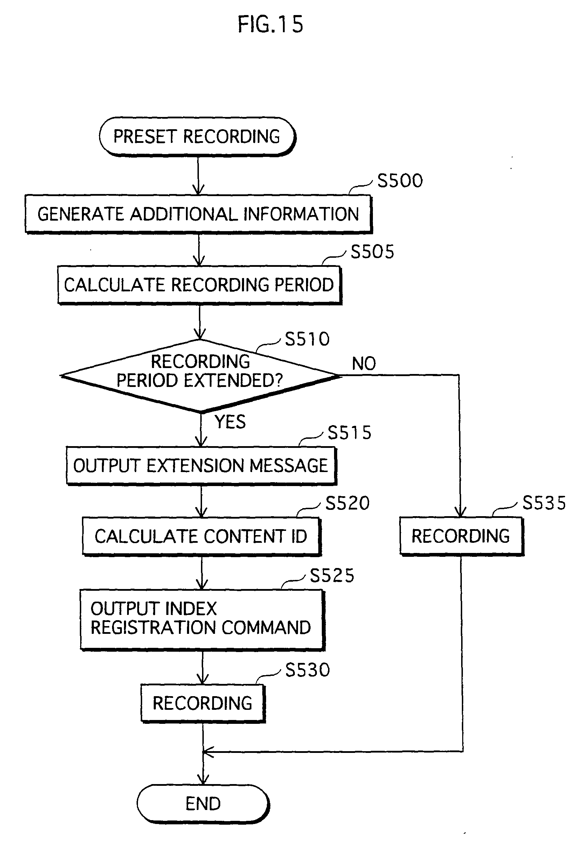

With reference to a flowchart shown in FIG. 15, a description is given to the processing performed by the recording control unit 107A to record a target broadcast program according to presetting information.

The recording control unit 107A first generates additional information and temporarily stores the generated additional information (step S500).

The recording control unit 107A then calculates the length of time period for performing the recording, based on the start date/time and end date/time shown by a piece of presetting information being processed, and temporarily stores the thus calculated time period as a recording period (step 5505).

Next, the recording control unit 107A further judges whether the recording period has been extended, with reference to the extension setting shown by the piece of presetting information (step 5510).

On judging in the step S510 that the recording period is not extended, the recording control unit 107Aperforms the preset recording according to a conventional technique (step 5535).

On judging in the step S510 that the recording period is extended, the recording control unit 107A outputs an extension message to the silence detecting unit 108A (step S515), and calculates a content ID (step 5520).

The recording control unit 107A outputs an index registration command to the index registering unit 109A (step S525).

Next, the recording control unit 107A records the target broadcast program, and outputs a recording-end message to the silence detecting unit 108A on completion of the recording (step S530).

### (2) Index Registration

Hereinafter, a description is given to the first index registration and the second index registration both of which is performed when the recording time period is extended.

The first index registration is performed when an index registration command is received from the recording control unit 107A. The second index registration is performed when a segment period and the display time of a silent frame are received. In the second index registration, an index entry is generated using the received segment period and display time, and the index entry is then stored.

### <First Index Registration>

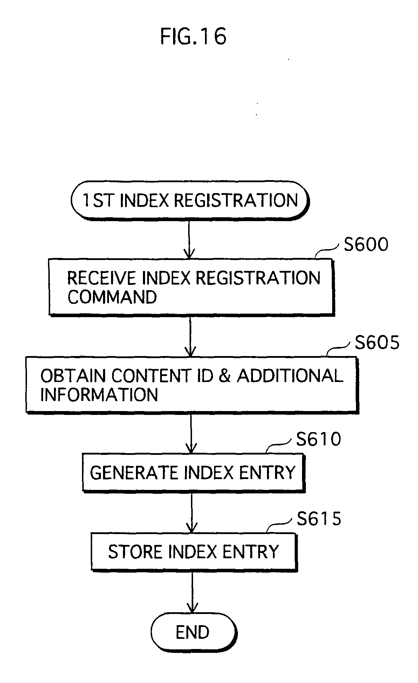

First, a description is given to the first index registration processing with reference to a flowchart shown in FIG. 16.

On receiving an index registration command from the recording control unit 107A (step 5600), the index registering unit 109A obtains a content ID and additional information from the recording control unit 107A (step 5605). The index registering unit 109A then generates an index entry composed of the obtained content ID and additional information, and the display time "00:00", which is the display time of the first frame of the recorded content (step S610). The index registering unit 109A records the thus generated index entry to the index table T200 (step S615).

### <Second Index Registration>

Now, a description is given to the second index registration processing by way of the differences from the index registration processing of the first embodiment.

The second index registration processing differs from the index registration processing of the first embodiment in that the step S120 is replaced by a step of obtaining a content ID and additional information from the recording control unit 107A, and generating an index entry using the obtained content ID, additional information, and target display time.

### (3) Thumbnail-List Display

Hereinafter, a description is given to the processing of thumbnail-list display performed by the record/playback apparatus 100A. The following processing relates to the differences from the thumbnail-list display processing shown in FIG. 10.

In the step S210, the thumbnail-list display unit 112A receives the thumbnail images and corresponding index entries from the thumbnail generating unit 111A. The thumbnail-list display unit 112A then generates a presentation set from each thumbnail image received and the additional information contained in a corresponding index entry. The thus generated presentation sets are displayed on the monitor 20 via the thumbnail-list screen M100.

Note that processing of the presentation set generation will be descried later.

### (4) Presentation Set Generation

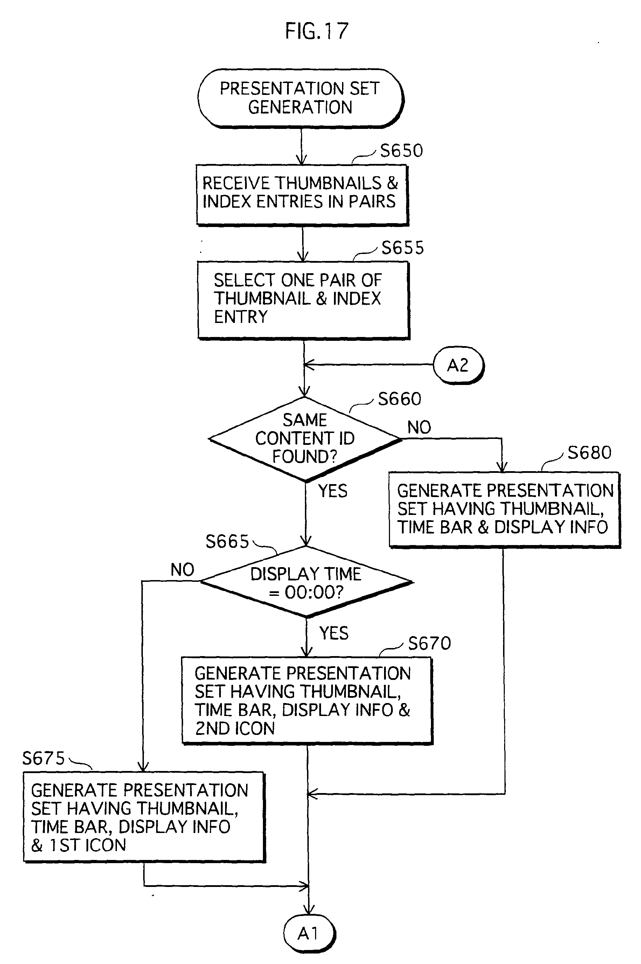

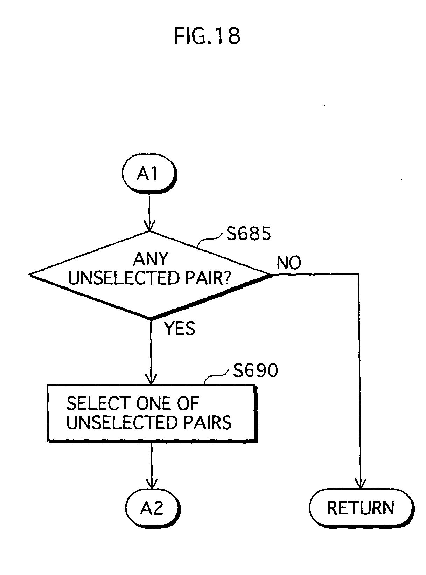

Hereinafter, a description is given to the presentation set generation processing with reference to a flowchart shown in FIGs. 17 and 18.

On receiving thumbnail images and corresponding index entries in pairs from the thumbnail generating unit 111A (step S650), the thumbnail-list display unit 112A obtains one pair of a thumbnail image and a corresponding index entry (step S655) . The thumbnail-list display unit 112A judges whether any other index entries contain the same content ID as the content ID shown by the obtained index entry (S660).

On judging in the step S660 that the same content ID is contained, the thumbnail-list display unit 112A further judges whether the index entry shows the display time "00:00" (S665).

On judging in the step S665 that the display time is "00 : 00", the thumbnail-list display unit 112A designates the obtained thumbnail image as a representative thumbnail, and designates the obtained additional information as display information. The thumbnail-list display unit 112A then generates a presentation set composed of the thus designated representative thumbnail, a time bar, the thus designated display information, and a second icon (step 5670). The time bar generated herein displays a position indicator on the left margin thereof.

Next, the thumbnail-list display unit 112A judges whether any pairs remain without being obtained (step S685).

On judging in the step S685 that there are remaining pairs, the thumbnail-list display unit 112A obtains one of the remaining pairs (step 5690), and goes back to the step S660 to repeat the operations following thereafter. On judging in the step S685 that there is no more pair remaining without being obtained, the thumbnail-list display unit 112A terminates the processing.

On judging in the step S665 that the display time is not "00:00", the thumbnail-list display unit 112A designates the thumbnail image as a representative thumbnail, and designates the additional information as display information. The thumbnail-list display unit 112A then generates a presentation set composed of the thus designated representative thumbnail, a time bar, the thus designated display information, and a first icon (step S675). Here, the time bar is generated so that a position indicator indicates a program transition that is detected through the silence detection. The thumbnail-list display unit 112A then performs the step S685 and the steps following thereafter.

On judging in the step S660 that the content ID shown by the received index entry is not present in any other index entries, the thumbnail-list display unit 112A designates the obtained thumbnail image as a representative thumbnail and designates the obtained additional information as display information. The thumbnail-list display unit 112A than generates a presentation set composed of the representative thumbnail, a time bar, and the display information (step 5680). The time bar generated herein displays a position indicator on the left margin thereof. The thumbnail-list display unit 112A then performs the step S685 and the steps following thereafter.

### 2.3 Thumbnail-List Displayed on Monitor 20

Here, a description is given to the thumbnail-list displayed on the monitor 20 by the thumbnail-list display unit 112A.

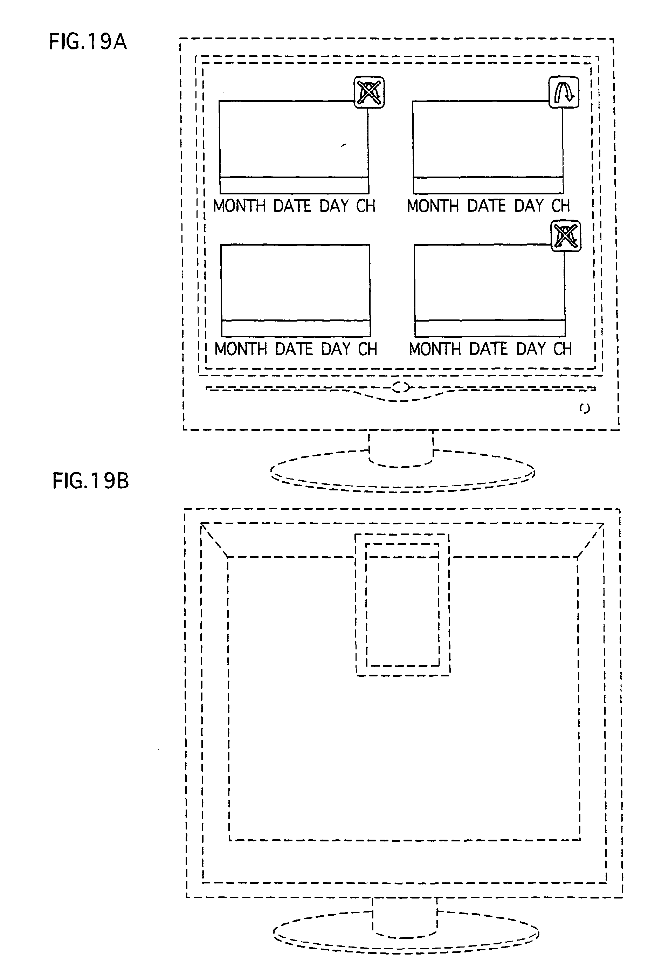

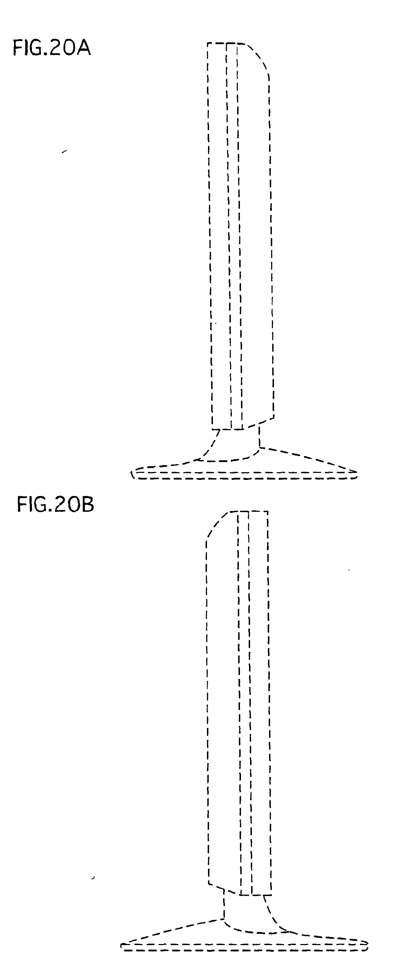

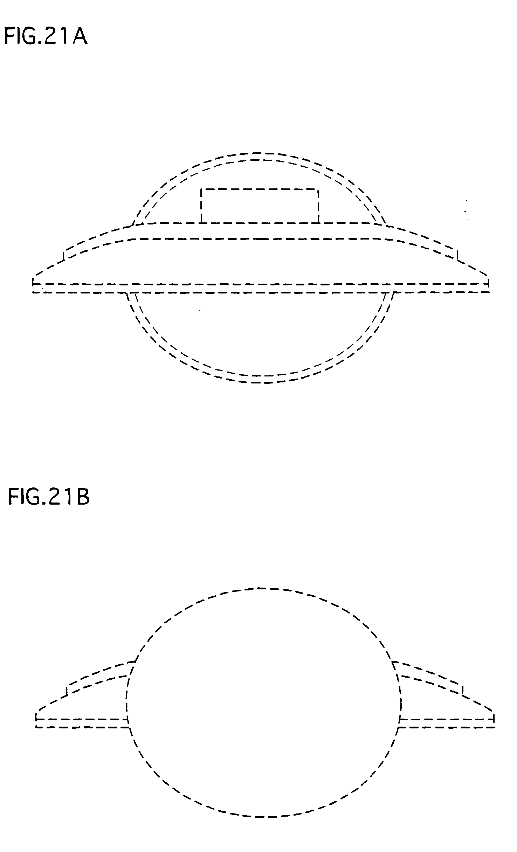

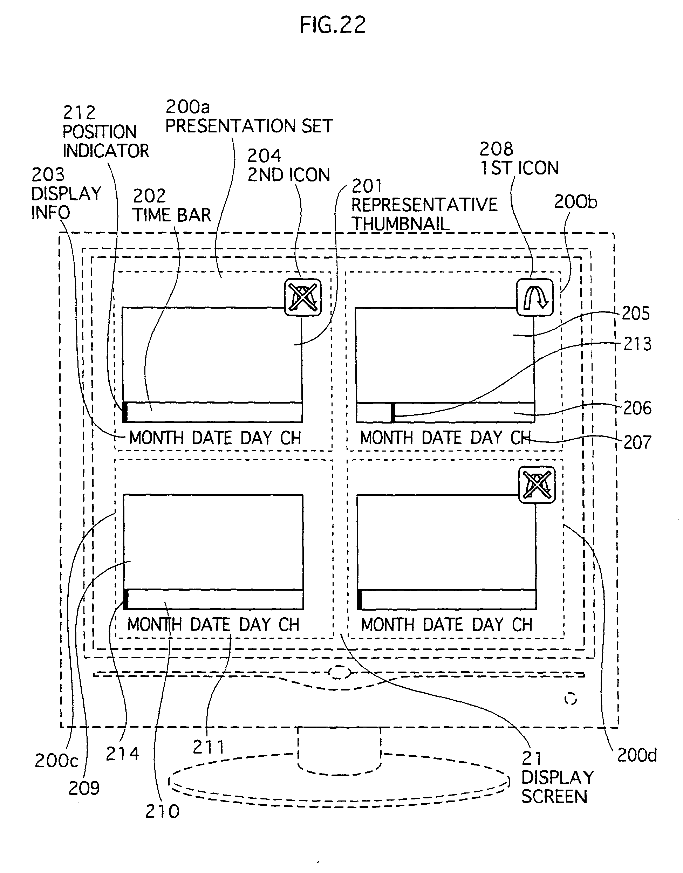

FIGs. 19-21 each show the monitor 20 displaying a thumbnail-list. Specifically, FIG. 19A is a front view, whereas FIG. 19B is a rear view. Furthermore, FIG. 20A is a right side view, whereas FIG. 20B is a left side view. Furthermore, FIG. 21A is a top view, whereas FIG. 21B is a bottom view. FIG. 22 shows various information items displayed on a display screen shown in the FIG. 19A.

In FIG. 22, four sets of information displayed within doted squares on a display screen 21 are the presentation sets 200a, 200b, 200c, and 200d. The presentation set 200a is composed of a representative thumbnail 201, a time bar 202, display information 203, and a second icon 204. The presentation set 200b is composed of a representative thumbnail 205, a time bar 206, display information 207, and a first icon 208. The presentation set 200c is composed of a representative thumbnail 209, a time bar 210, and display information 211. The presentation set 200d is similar in structure to the presentation set 200a.

Each of the representative thumbnails 201, 205, and 209 shows an image located at the playback start position of a corresponding content. Each of the time bars 202, 206, and 210 indicates the position of a respective representative thumbnail, in relation to the entire length of a respective content. Each piece of display information 203, 207, and 211 is the additional information showing the date, day, and time at which the content containing a respective representative thumbnail is recorded, along with the channel number on which the content is broadcast. The first icon 208 indicates that a corresponding content is recorded by extending the preset recording period, and to be played back starting from the display position of the representative thumbnail. The second icon 204 indicates that a corresponding content is recorded by extending the preset recording period, but to be played back from the beginning of the recorded content. Each of the position indicators 212, 213, and 214 displayed within the respective time bars 202, 206, and 210, indicates the position the representative thumbnail, in relation to the entire length of the content taken as one.

In short, when a presentation set is composed of the representative thumbnail 205, the time bar 206, the display information 207, and the first icon 208, the content containing the representative thumbnail is to be played back starting from the position of a frame corresponding to the representative thumbnail.

When a presentation set is composed of the representative thumbnail 201, the time bar 202, the display information 203, and the second icon 204, the content containing the representative thumbnail is recorded by extending the preset recording period, but to be played back from the recording start position without skipping any part of the content.

When a presentation set is composed of the representative thumbnail 209, the time bar 210, and the display information 211, the content containing the representative thumbnail is recorded without extending the preset recording period and thus to be played back starting from the recording start position.

In FIG. 22, the presentation set 200a is displayed on the top left of the display screen. Alternatively, the presentation set 200b or 200c may be displayed at the top left.

The same holds with respect to the presentation set displayed at the bottom left, top right, bottom right of the display screen. Any of the presentation sets 200a, 200b, 200c, and 200d may displayed at any another display position on the screen 21.

### 2.4 Modifications of Embodiment 2

Although the present invention has been described by way of the embodiment 2 above, it is naturally appreciated that the present invention is not limited to the specific embodiment above. Various modifications including the following still fall within the scope of the present invention.
(1) In the embodiment 2, the time bar is displayed below the representative thumbnail in each presentation set. However, the time bar may be displayed above the representative thumbnail, or on the right or left of the representative thumbnail.

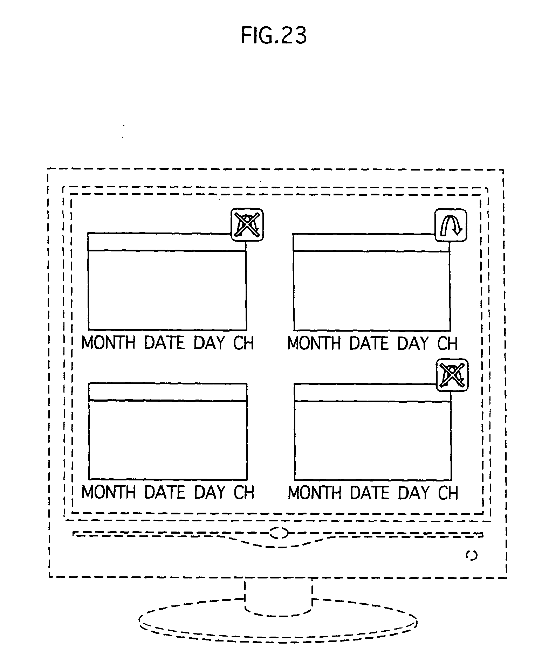

FIGs. 23-28 show the monitor 20 displaying the time bar with such layouts.

### <Time Bar Displayed above Representative Thumbnail>

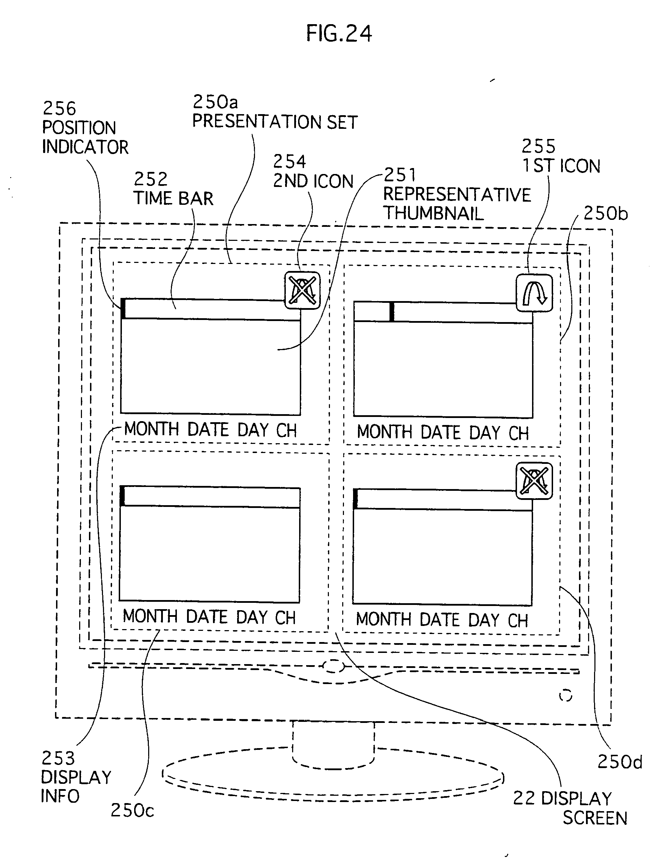

FIG. 23 is a front view showing the monitor 20 displaying a thumbnail-list. The rear view, left and right side views, top and bottom views of the monitor 20 are omitted since they are the same as FIGs. 19B, 20A and 20B, 21A and 21B. FIG. 24 shows various information items displayed on a display screen 22 shown in the FIG. 23. The presentation sets 250a, 250b, 250c, and 250d are basically similar in structure to those shown in FIG. 22. Furthermore, a representative thumbnail 251, a time bar 252, display information 253, a second icon 254, a first icon 255, and a position indicator 256 are basically similar to their counterparts shown in FIG. 22. Hence, no related description is given to avoid the redundancy.

### <Time Bar Displayed on Left Side of Representative Thumbnail>

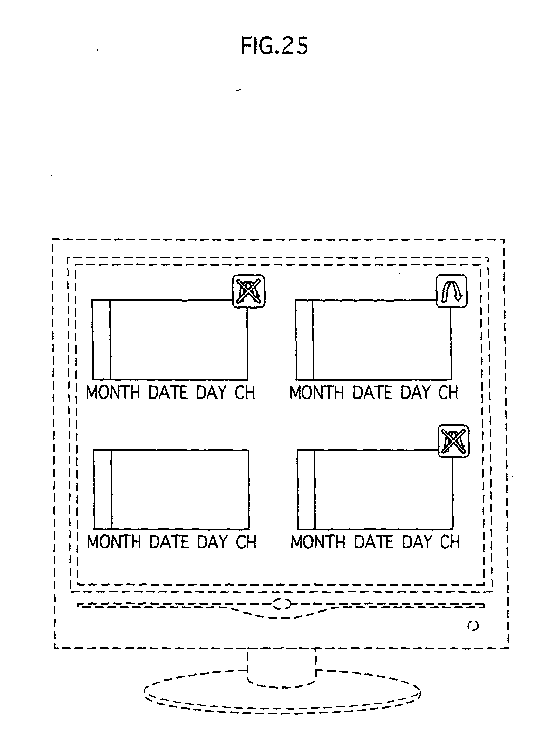

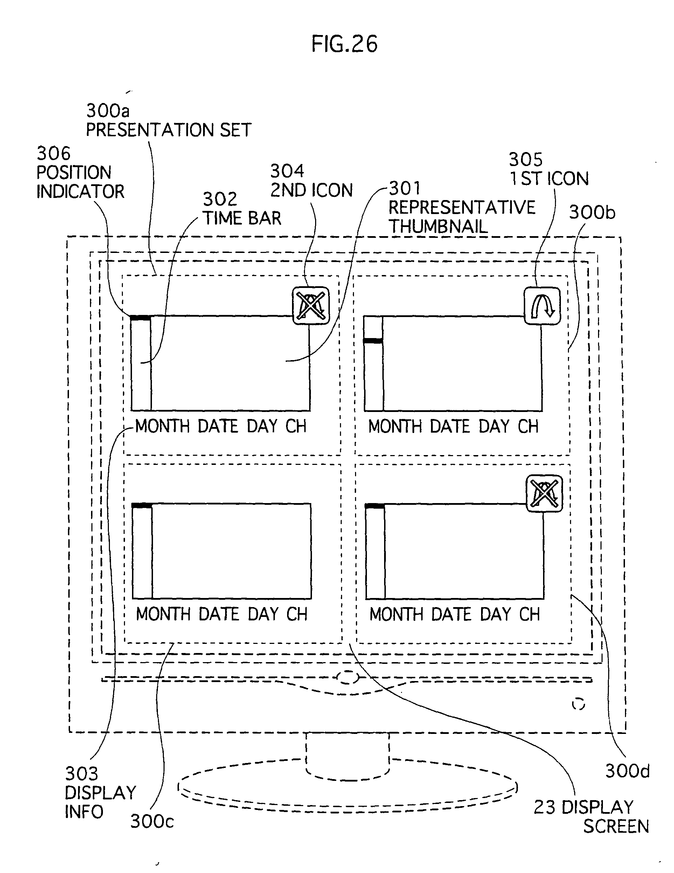

FIG. 25 is a front view showing the monitor 20 displaying a thumbnail-list. The rear view, left and right side views, top and bottom views of the monitor 20 are omitted since they are the same as FIGs. 19B, 20A and 20B, 21A and 21B. FIG. 26 shows various information items displayed on a display screen 23 shown in the FIG. 25. The presentation sets 300a, 300b, 300c, and 300d are basically similar in structure to those shown in FIG. 22. Furthermore, a representative thumbnail 301, a time bar 302, display information 303, a second icon 304, a first icon 305, and a position indicator 306 are basically similar to their counterparts shown in FIG. 22. Hence, no related description is given to avoid the redundancy.

### <Time Bar Displayed on Right Side of Representative Thumbnail>

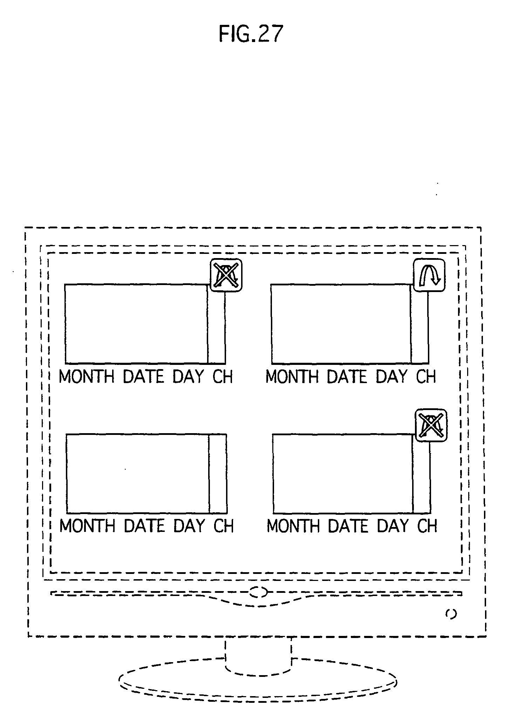

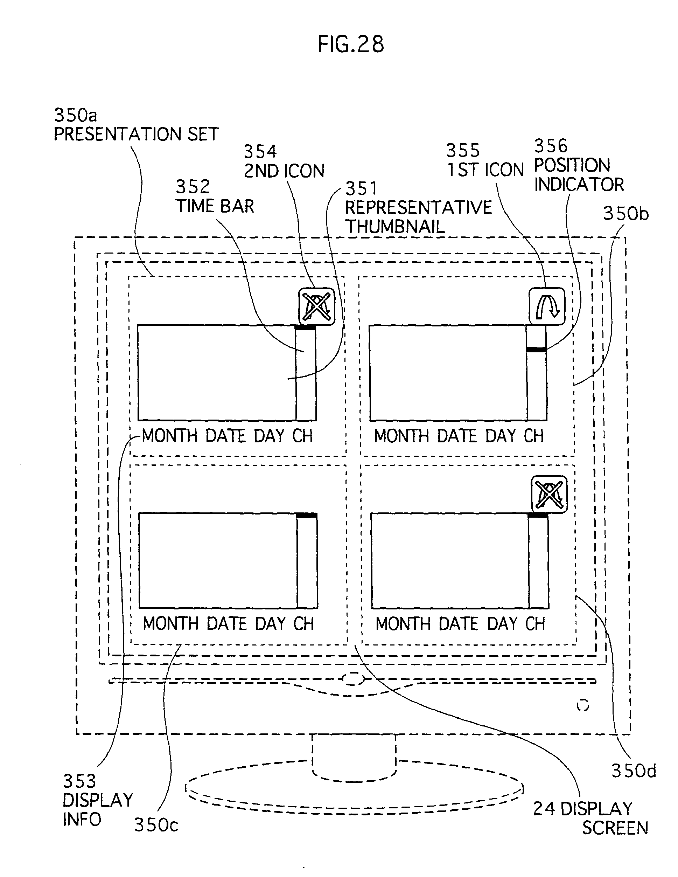

FIG. 27 is a front view showing the monitor 20 displaying a thumbnail-list. The rear view, left and right side views, top and bottom views of the monitor 20 are omitted since they are the same as FIGs. 19B, 20A and 20B, 21A and 21B. FIG. 28 shows various information items displayed on a display screen 24 shown in the FIG. 27. The presentation sets 350a, 350b, 350c, and 350d are basically similar in structure to those shown in FIG. 22. Furthermore, a representative thumbnail 351, a time bar 352, display information 353, a second icon 354, a first icon 355, and a position indicator 356 are basically similar to their counterparts shown in FIG. 22. Hence, no related description is given to avoid the redundancy.

Furthermore, the time bar may be replaced by a circle graph indicating the position of the representative thumbnail, in relation to the entire length of the recording content. Such a circle graph may be displayed bellow or above the representative thumbnail, or the right or left side of the representative thumbnail.

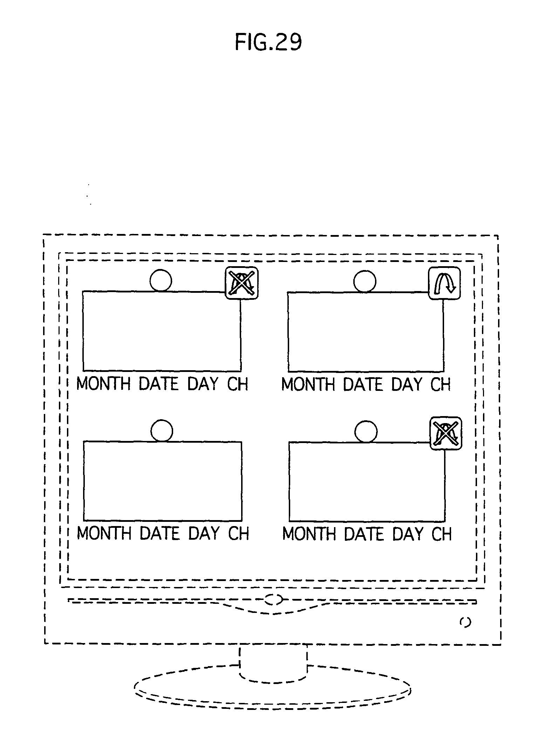

FIGs. 29-36 show the display monitor 20 displaying the circle graph with such layouts.

### <Circle Graph Displayed above Representative Thumbnail>

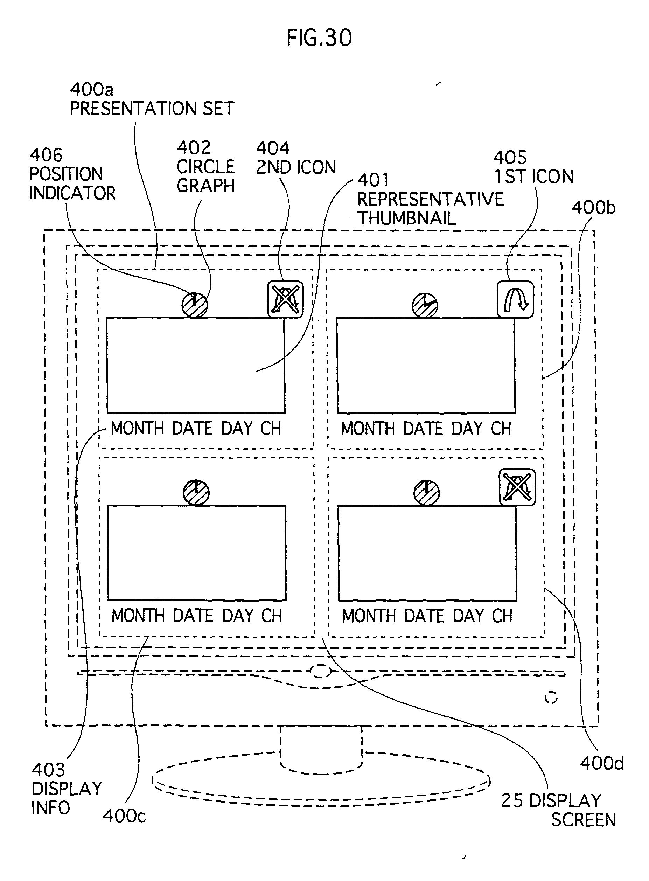

FIG. 29 is a front view showing the monitor 20 displaying a thumbnail-list. The rear view, left and right side views, top and bottom views of the monitor 20 are omitted since they are the same as FIGs. 19B, 20A and 20B, 21A and 21B. FIG. 30 shows various information items displayed on a display screen 25 shown in the FIG. 29. The presentation sets 400a, 400b, 400c, and 400d are basically similar in structure to those shown in FIG. 22 except that each time bar is replaced with a circle graph. Furthermore, a representative thumbnail 401, display information 403, a second icon 404, and a first icon 405 are basically similar to their counterparts shown in FIG. 22. Hence, no related description is given to avoid the redundancy.

Similarly to the time bar 202 shown in FIG. 22, the circle graph represents the entire length of the recorded content, and a position indicator 406 represents the position of the representative thumbnail, in relation to the entire length of content taken as one.

### <Circle Graph Displayed below Representative Thumbnail>

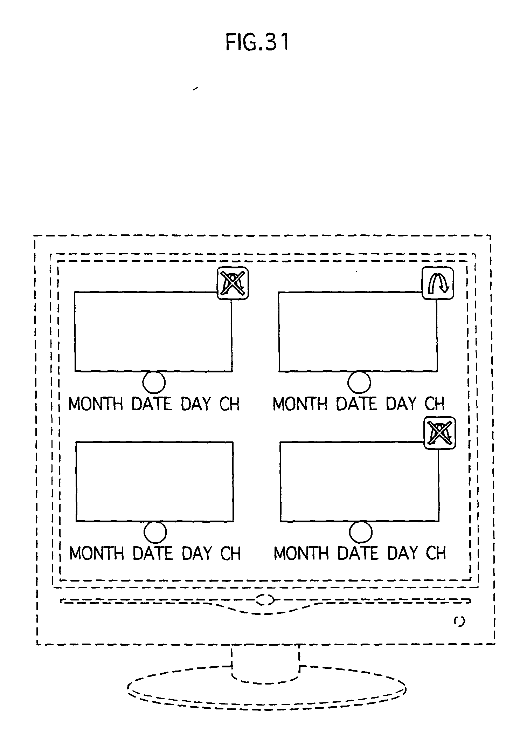

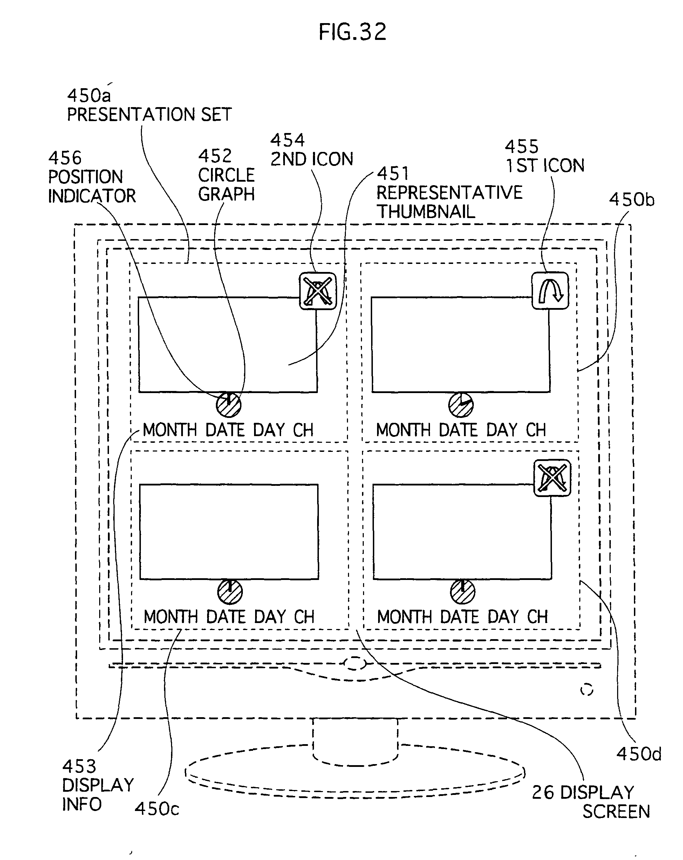

FIG. 31 is a front view showing the monitor 20 displaying a thumbnail-list. The rear view, left and right side views, top and bottom views of the monitor 20 are omitted since they are the same as FIGs. 19B, 20A and 20B, 21A and 21B. FIG. 32 various information items displayed on a display screen 26 shown in the FIG. 31. The presentation sets 450a, 450b, 450c, and 450d are basically similar in structure to those shown in FIG. 30. Furthermore, a representative thumbnail 451, a circle graph 452, display information 453, a second icon 454, and a first icon 455 are basically similar to their counterparts shown in FIG. 30. Hence, no related description is given to avoid the redundancy.

### <Circle Graph Displayed on Left Side of Representative Thumbnail>

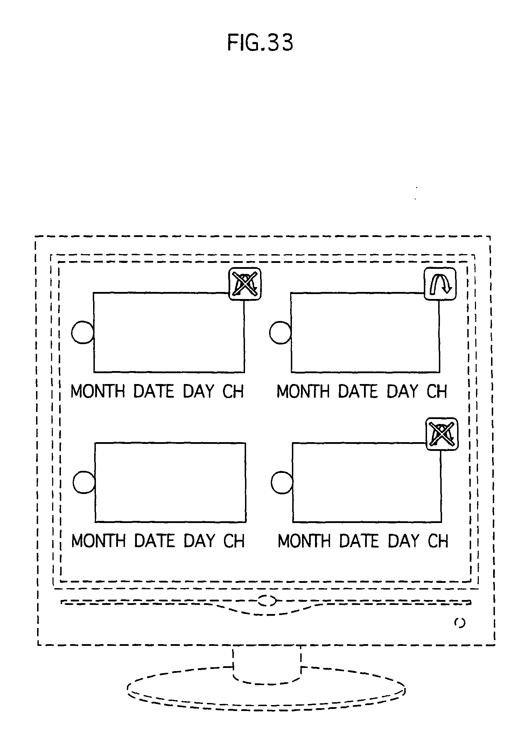

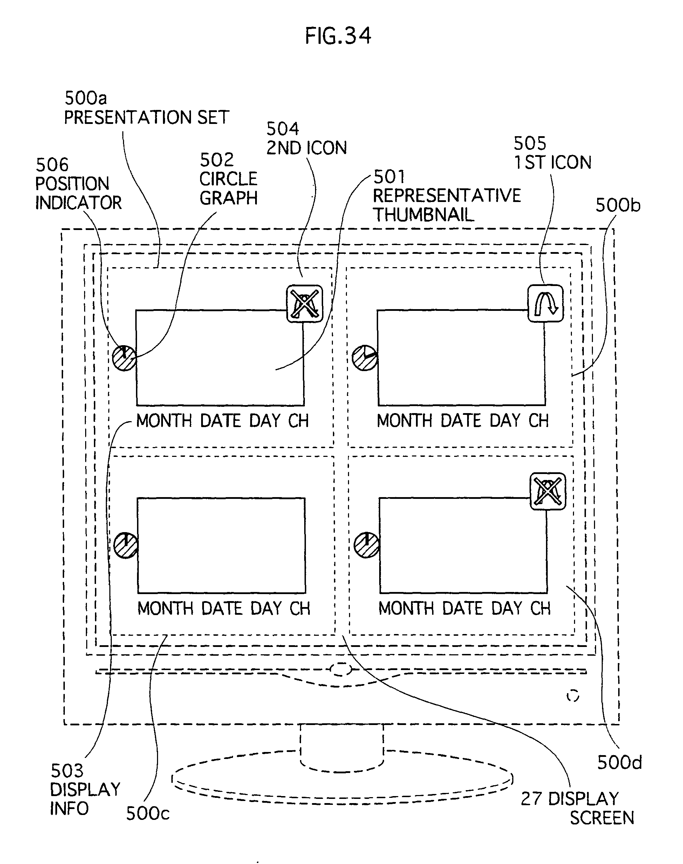

FIG. 33 is a front view showing the monitor 20 displaying a thumbnail-list. The rear view, left and right side views, top and bottom views of the monitor 20 are omitted since they are the same as FIGs. 19B, 20A and 20B, 21A and 21B. FIG. 34 various information items displayed on a display screen 27 shown in the FIG. 33. The presentation sets 500a, 500b, 500c, and 500d are basically similar in structure to those shown in FIG. 30. Furthermore, a representative thumbnail 501, a circle graph 502, display information 503, a second icon 504, and a first icon 505 are basically similar to their counterparts shown in FIG. 30. Hence, no related description is given to avoid the redundancy.

### <Circle Graph Displayed on Right Side of Representative Thumbnail>

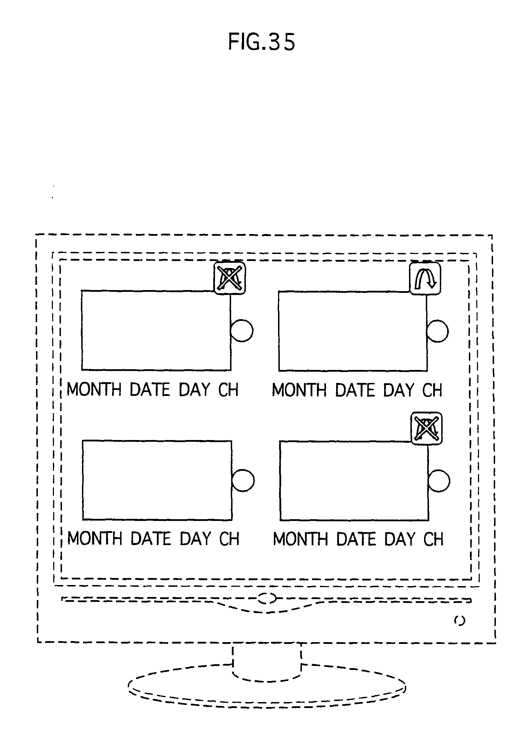

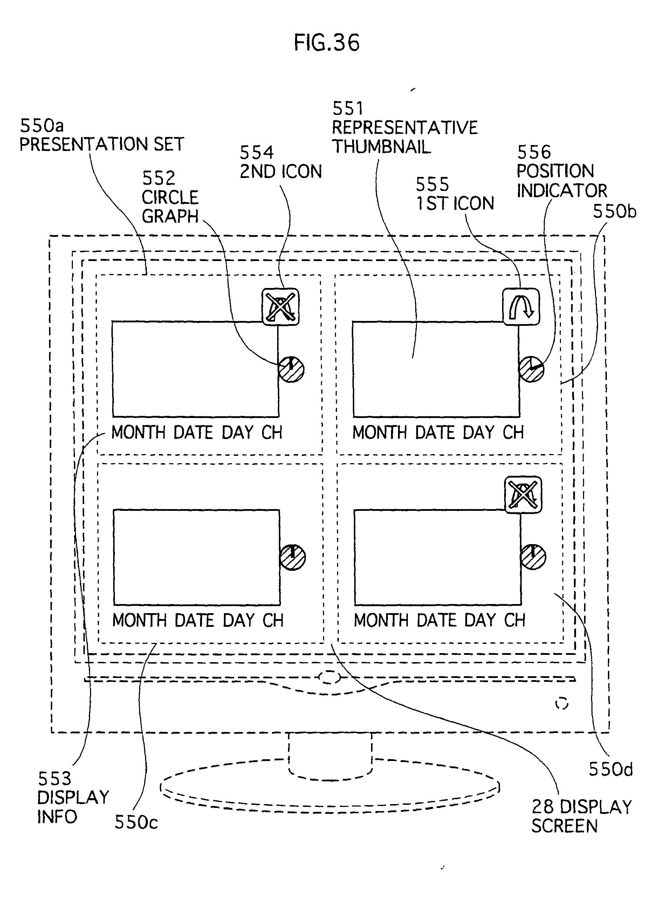

FIG. 35 is a front view showing the monitor 20 displaying a thumbnail-list. The rear view, left and right side views, top and bottom views of the monitor 20 are omitted since they are the same as FIGs. 19B, 20A and 20B, 21A and 21B. FIG. 36 shows various information items displayed on a display screen 28 shown in the FIG. 35. The presentation sets 550a, 550b, 550c, and 550d are basically similar in structure to those shown in FIG. 30. Furthermore, a representative thumbnail 551, a circle graph 552, display information 553, a second icon 554, and a first icon 555 are basically similar to their counterparts shown in FIG. 30. Hence, no related description is given to avoid the redundancy.
(2) Furthermore, the entire angle of the circle graph may represent twenty-four hours or twelve hours, so that the position indicator indicates the recording start time in terms of a time of day.
   Similarly, the entire length of time bar may represent twenty-four hours or twelve hours, so that the position indicator indicates the recording start time in terms of a time of day.
(3) In the embodiment 2 above, when a content is recorded without extension, a corresponding presentation set is composed of a representative thumbnail, a time bar, and display information. Alternatively, however, such a presentation set may be composed of a representative thumbnail, a time bar, display information, and a second icon.

### 3. EMBODIMENT 3

Now, a description is given to a record/playback apparatus 100B consistent with an embodiment 3 of the present invention.

Similarly to the record/broadcast apparatus 100 of the embodiment 1, the record/playback apparatus 100B receives an EPG and broadcast programs from the broadcast apparatus 10. Furthermore, the monitor 20 of the embodiment 1 is connected to the record/playback apparatus 100B.

### 3.1 Structure of Record/Playback Apparatus 100B

Here, a description is given to the structure of the record/playback apparatus 100B.

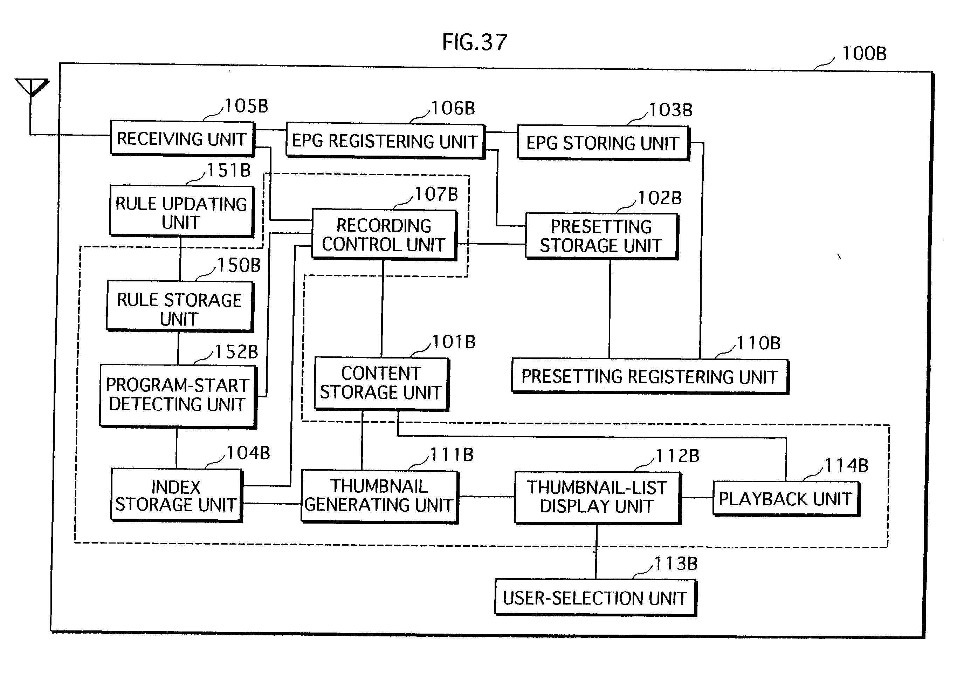

As shown in FIG. 37, the record/playback apparatus 100B is composed of a content storage unit 101B, a presetting storage unit 102B, an EPG storage unit 103B, an index storage unit 104B, a receiving unit 105B, an EPG registering unit 106B, a recording control unit 107B, a presetting registering unit 110B, a thumbnail generating unit 111B, a thumbnail-list display unit 112B, a user-selection unit 113B, a playback unit 114B, a rule storage unit 150B, a rule updating unit 151B, and a program-start detecting unit 152B.

Specifically, the record/playback apparatus 100B is a computer system composed generally of a microprocessor, a ROM, a RAM, and a hard disk unit. The ROM or hard disk unit stores a computer program, and the microprocessor executes the program, thereby achieving the functions of the record/playback apparatus 100B.

### (1) Content Storage Unit 101B

The content storage unit 101B is basically similar to the content storage unit 101A and naturally to the content storage unit 101. Thus, a description thereof is omitted.

### (2) Presetting Storage Unit 102B

The presetting storage unit 102B is basically similar to the presetting storage unit 102A and naturally to the presetting storage unit 102. Thus, a description thereof is omitted. Similarly to the first embodiment, each piece of presetting information in this embodiment is composed of a start date/time an end date/time, a channel, and an extension setting.

### (3) EPG Storage Unit 103B

The EPG storage unit 103B is basically similar to the EPG storage unit 103A and naturally to the EPG storage unit 103. Thus, a description thereof is omitted.

### (4) Index Storage Unit 104B

The index storage unit 104B is basically similar to the index storage unit 104A, and thus a description thereof is omitted.

### (5) Receiving Unit 105B

The receiving unit 105B is basically similar to the receiving unit 105A and naturally to the receiving unit 105. Thus, a description thereof is omitted.

### (6) EPG Registering unit 106B

The EPG registering unit 106B is basically similar to the EPG registering unit 106A and naturally to the EPG registering unit 106. Thus, a description thereof is omitted.

### (7) Recording Control Unit 107B

The recording control unit 107B records broadcast programs in accordance with a user instruction or with presetting information.

The recording control unit 107B is provided with a timer function for measuring a current time, as well as a calendar function for managing days of a week. When recording a broadcast program, the recording control unit 107B obtains a date, day, and time of recording, with the use of the timer and calendar functions. The recording control unit 107B also obtains a channel number on which the broadcast program being recorded is broadcast. The recording control unit 107B then generates a piece of additional information composed of the channel number and the recording date, day, and time, and temporarily stores the generated piece of additional information.'

With the use of the timer function, the recording control unit 107B determines the timing of starting the preset recording in accordance with the presetting information stored in the presetting storage unit 102B.

The recording control unit 107B determines to start the preset recording when it is judged that the current time has reached the start date/time shown by any piece of presetting information. On determining to start the preset recording, the recording control unit 107B calculates the length of time period for recording, based on the start date/time and end date/time shown by the piece of presetting information, and temporarily stores the thus calculated time period as a recording period.

Next, the recording control unit 107B further judges whether the recording period is extended, with reference to the extension setting shown by the piece of presetting information.

On judging that the recording period is extended, the recording control unit 107B outputs an extension message and the channel number shown by the generated additional information to the program-start detecting unit 152B. The extension message indicates that the recording is to be performed for an extended time period.

Then, the recording control unit 107B calculates a content ID, and temporarily stores the calculated content ID.

The recording control unit 107B outputs an index registration command to the program-start detecting unit 152B. The index registration command instructs to store an index entry corresponding to the first fráme of a recorded content.

The recording control unit 107B digitizes a broadcast program passed from the receiving unit 105B, and stores the digitized data as a content to the content storage unit 101B. At this time, the temporally stored content ID is also stored to the content storage unit 101B, in correspondence with the content. Upon completion of the recording, the recording control unit 107B outputs to the program-start detecting unit 152B, a recording-end message indicating that the recording is completed.

On the other hand, on judging that the recording period is not extended, the recording control unit 107B performs the preset recording according to a conventional technique. That is, the recording control unit 107B calculates a content ID, stores the content ID in correspondence with a content to the content storage unit 101B. Then, the recording control unit 107B generates an index entry composed of the content ID, the display time of the first frame of the recorded content, the additional information, and the recording time period, and stores the thus generated index entry to the index storage unit 104B . Since this technique is known in the art, a detailed description thereof is omitted.

Further, no detailed description is given to a technique of recording a content in response to a user instruction, since it is also known in the art. When recording a content in response to a user instruction, the recording control unit 107B calculates a content ID, and stores a broadcast program to the content storage unit 101B in correspondence with the calculated content ID. The recording control unit 107B measures the time period elapsed from the recording start to the recording end, and designates the measured time period as the recording time period. After completing the recording, the recording control unit 107B generates an index entry composed of the content ID, the display time of the first frame of the recorded content, the additional information, and the recording period, and then stores the generated index entry to the index table T200 held in the index storage unit 104B.

It should be noted that the recording control unit 107B is described to record a content. However, this is for the sake of simplicity in illustrating the operations of the recording control unit 107B. In practice, similarly to a conventional technique, the recording control unit 107B records a content to the content storage unit 101B by sequentially recording data received from the receiving unit 105B i.e. data separated from the broadcast wave.

### (8) Presetting Registering Unit 110B

The presetting registering unit 110B is basically similar to the presetting registering unit 110A and naturally to the presetting registering unit 110, and thus description thereof is omitted.

### (9) Thumbnail Generating Unit 111B

The thumbnail generating unit 111B is basically similar to the thumbnail generating unit 111A, and thus a description thereof is omitted.

### (10) Thumbnail-List Display Unit 112B

The thumbnail-list display unit 112B is basically similar to the thumbnail-list display unit 112A, and thus a description thereof is omitted.

### (11) User-Selection Unit 113B

The user-selection unit 113B is basically similar to the user-selection unit 113A, and thus a description thereof is omitted.

### (12) Playback Unit 114B

The playback unit 114B is basically similar to the playback unit 114A, and a description thereof is omitted.

### (13) Rule Storage Unit 150B

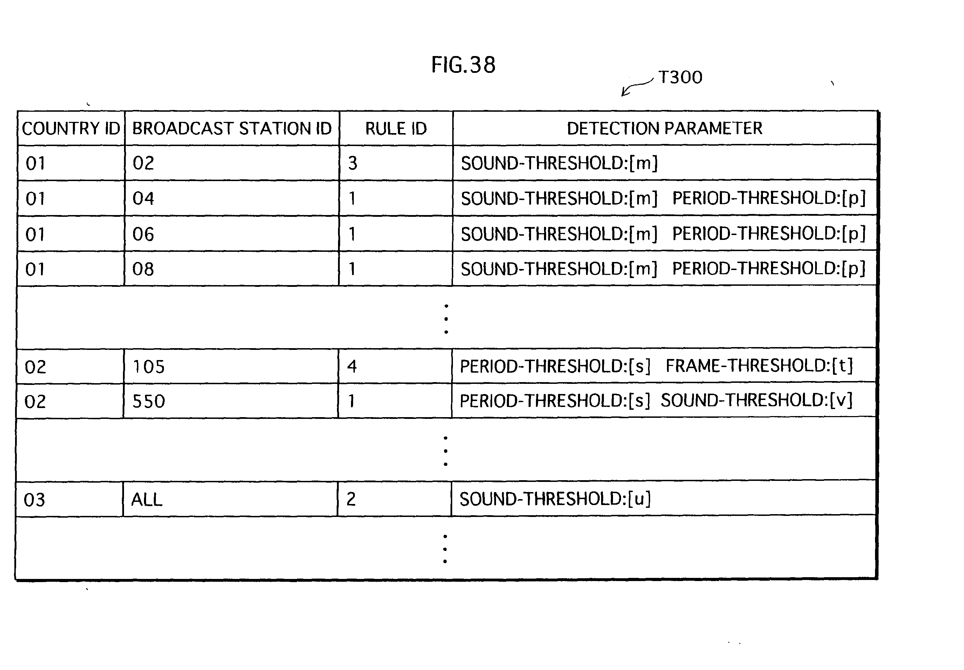

The rule storage unit 150B stores a rule table T300 as exemplified in FIG. 38.

The rule table T300 is provided with a memory area for storing at least one set composed of a country ID, a broadcast station ID, a rule ID, and a detection parameter. Hereinafter, each set composed of a country ID, a broadcast station ID, a rule ID, and a detection parameter is referred to as a detection rule.

The country ID identifies a country. In this example, the country ID "01" identifies Japan, "02" identifies the United States of America, and "03" identifies Republic of Korea.

The broadcast station ID identifies a broadcast station. In this example, a channel number is used as a broadcast station ID. Note that when the broadcast station ID shows "ALL", all the broadcast stations are correctively identified.

The rule ID identifies a detection rule used to detect the beginning of a broadcast program. According to the detection rule identified by the rule ID "1", a CM is detected through the silent frame detection. The silent frame located at a position where the total CM period comes to exceed a threshold is determined to be the first frame of a broadcast program.

According to the detection rule identified by the rule ID "2", a first group of consecutively broadcast CMs is detected through the silent frame detection. The end of the thus detected first CM group is determined to correspond to the beginning of a broadcast program.

According to the detection rule identified by the rule ID "3", a CM start signal indicating the beginning of a CM spot (a CM inserted between two broadcast programs) is detected from the content received by the receiving unit 105B. In response to a CM start signal detected, CMs are detected through the silent frame detection in order to locate the beginning of a broadcast program.

According to the detection rule identified by the rule ID "4", CMs are detected through the black frame detection. The black frame at which the total CM period exceeds a threshold is determined to be the beginning of a broadcast program.

The detection parameter is a threshold of the volume level for detecting a silent frame (hereinafter, "sound-threshold"), a threshold of the total CM period for detecting a program transition (hereinafter, "period-threshold"), or a threshold relating to the color component of frames for detecting a black frame (hereinafter, "frame-threshold").

### (14) Rule Updating Unit 151B

The rule updating unit 151B receives a detection rule from an external source, and records the received rule to the rule table T300.

In the case of receiving a detection rule containing the country ID and broadcast station ID both matching those contained in an already stored detection rule, the currently stored detection rule is updated to the newly received detection rule.

In this embodiment, a recording medium (a DVD, for example) storing detection rules is mounted to the record/playback apparatus 100B, and the record/playback apparatus 100B receives the detection rules from the recording medium.

### (15) Program-Start Detecting Unit 152B

The program-start detecting unit 152B stores a country ID identifying a country in which the record/playback apparatus is used. The country ID is received in advance by a user operation. Note that the stored country ID is the same as one of the country IDs contained in the rule table T300.

The program-start detecting unit 152B has a memory area for storing a total CM period, which is a total of time periods of CMs that are consecutively broadcast. The initial value of the total CM period is "0" seconds.

In addition, the program-start detecting unit 152B has a memory area for sequentially storing the display times of each silent frame detected.

On receiving an index registration command from the recording control unit 107B, the program-start detecting unit 152B obtains a content ID, additional information, and a recording period from the recording control unit 107B. The program-start detecting unit 152B then generates an index entry composed of the content ID, the additional information, and the display time "00:00", which is a first frame at which recording of the content starts. The program-start detecting unit 152B stores the thus generated index entry to the index storage unit 104B.

On receiving an extension message and a channel number from the recording control unit 107B, the program-start detecting unit 152B obtains the country ID stored therein. The program-start detecting unit 152B then obtains, from the rule table T300, a detection rule that contains the obtained country ID and the received channel number. The program-start detecting unit 152B then judges whether a rule ID contained in the obtained detection rule is "1", "2", "3", or "4".

Hereinafter, a description is given to operations instructed by each rule ID.

### <Rule ID 1>

On judging that the rule ID is "1", the program-start detecting unit 152B performs the following.

First, the program-start detecting unit 152B detests a silent frame F(1) using a predetermined algorithm and a sound-threshold shown by the obtained detection rule, and stores the display time of the detected silent frame F(1) to the display time memory area. When detecting a silent frame F(n) within a predetermined time period (two minutes, for example) from the time of detecting a silent,frame F(n-1), the program-start detecting unit 152B stores the display time of the silent frame F(n) to the display time memory area ("n" is an integer equal to 2 or greater) . The program-start detecting unit 152B then calculates a segment period between the two silent frames F(n-1) and F(n) using their display times, and judges whether a program broadcast during the segment period is a CM, based on the calculated segment period. For example, when a segment period is equal to 15 or 30 seconds, the program broadcast during the segment period is judged as a CM.

On judging the broadcast program is a CM, the program-start detecting unit 152B adds the segment period to the total CM period currently stored in the CM period memory area, thereby updating the total CM period. Thereafter, the program-start detecting unit 152B enters a wait state for the next silent frame F(n+1) to be detected.

On judging that the broadcast program is not a CM, the program-start detecting unit 152B further judges whether the total CM period stored in the CM period memory area exceeds the period-threshold (300 seconds, for example). On judging that the period-threshold is exceeded, the program-start detecting unit 152B obtains a content ID, additional information, and a recording period from the recording control unit 107B. The program-start detecting unit 152B then generates an index entry composed of the content ID, the additional information, the recording period, and the display time of the silent frame F(n-1), which is detected immediately before the most-recently detected silent frame F(n). On the other hand, on judging that the period-threshold is not exceeded, the program-start detecting unit 152B resets the total CM period to the initial value, and enters a wait state for a silent frame to be detected.

Failing to detect a silent frame F(n+1) within the predetermined time period (two minutes, for example) from the time of detecting the silent frame F(n), the program-start detecting unit 152B judges that the silent frame F(n) corresponds to a transition from a CM to a broadcast program. Thus, the program-start detecting unit 152B judges whether the total CM period stored in the CM period memory area exceeds the period-threshold. On judging that the period-threshold is exceeded, the program-start detecting unit 152B obtains a content ID, additional information, and a recording period from the recording control unit 107B, and generates an index entry composed of the recording ID, the additional information, the recording period, and the display time of the silent frame F(n), which is the most-recently detected silent frame. The thus generated index entry is stored to the index storage unit 104B. On the other hand, on judging that the period-threshold is not exceeded, the program-start detecting unit 152B resets the total CM period to the initial value, and enters a wait state for a silent frame to be detected.

According to the above, the period-threshold (i.e. 300 seconds) is an integral multiple of the reference value (i.e. 15 or 30 seconds) that is compared with a segment period. Yet, the period-threshold may be any value other than an integral multiple of the reference value. Furthermore, when a segment period is equal to the reference value of 15 or 30 seconds, it is judged that a program broadcast during the segment period is a CM. Yet, the judgment may be made in other manners. For example, the reference value may be set specifically to 15 seconds. When a segment period is an integral multiple of the reference value and is not exceeding the maximum period of a CM broadcast (30 second, for example), a program broadcast during the segment period is judged as a CM. In this case, the threshold (300 seconds) compared with a CM period may also be an integral multiple of the reference value. Yet, the threshold needs to be longer than the maximum CM period. Furthermore, it is described above that the predetermined time period for detecting a next silent frame is two minutes, for example. The predetermined time period may take any value as long as it is longer than the maximum CM period.

### <Rule ID 2>

On judging that the rule ID is "2", the program-start detecting unit 152B performs the following.

First, the program-start detecting unit 152B detests a silent frame F(1) using a predetermined algorithm and a sound-threshold shown by the obtained detection rule, and stores the display time of the detected silent frame F(1) to the display time memory area. When detecting a silent frame F(n) within a predetermined time period (two minutes, for example) from the time of detecting a silent frame F(n-1), the program-start detecting unit 152B stores the display time of the silent frame F(n) to the display time memory area ("n" is an integer equal to 2 or greater). The program-start detecting unit 152B then calculates a segment period between the two silent frames F(n-1) and F(n) using their display times, and judges whether a program broadcast during the segment period is a CM based on the calculated segment period.

On judging the broadcast program is a CM, the program-start detecting unit 152B enters a wait state for the next silent frame F(n+1) to be detected.

On judging the broadcast program is not a CM, the program-start detecting unit 152B judges that the silent frame F(n-1) corresponds to a transition from a CM to a broadcast program. Thus, the program-start detecting unit 152B obtains a content ID, additional information, and a recording period from the recording control unit 107B, and generates an index entry composed of the recording ID, the additional information, the recording period, and the display time of the silent frame F(n-1) . The program-start detecting unit 152B stores the thus generated index entry to the index storage unit 104B, and terminates the processing.

Failing to detect a silent frame F(n+1) within the predetermined time period (two minutes, for example) from the time of detecting the silent frame F(n), the program-start detecting unit 152B judges that the silent frame F(n) corresponds to a transition from a CM to a broadcast program. Thus, the program-start detecting unit 152B obtains a content ID, additional information, and a recording period from the recording control unit 107B, and generates an index entry composed of the recording ID, the additional information, the recording period, and the display time of the silent frame F(n). The program-start detecting unit 152B stores the thus generated index entry to the index storage unit 104B, and terminates the processing.

### <Rule ID 3>

On judging that the rule ID is "3", the program-start detecting unit 152B performs the following.

On sensing a CM start signal from the content that is received from the receiving unit 105B, the program-start detecting unit 152B detests a silent frame F(1) using a predetermined algorithm and a sound-threshold shown by the obtained detection rule, and stores the display time of the detected silent frame F(1) to the display time memory area. When detecting a silent frame F(n) within a predetermined time period (two minutes, for example) from the time of detecting a silent frame F(n-1), the program-start detecting unit 152B stores the display time of the silent frame F(n) to the display time memory area ("n" is an integer equal to 2 or greater). The program-start detecting unit 152B then calculates a segment period between the two silent frames F(n-1) and F(n) using their display times, and judges whether a program broadcast during the segment period is a CM (spot CM) based on the calculated segment period.

On judging that the broadcast program is a CM, the program-start detecting unit 152B enters a wait state for the next silent frame F(n+1) to be detected.

On judging the broadcast program is not a CM, the program-start detecting unit 152B judges that the silent frame F(n-1) corresponds to a transition from a CM to a broadcast program. Thus, the program-start detecting unit 152B obtains a content ID, additional information, and a recording period from the recording control unit 107B, and generates an index entry composed of the recording ID, the additional information, the recording period, and the display time of the silent frame F(n-1). The program-start detecting unit 152B stores the thus generated index entry to the index storage unit 104B, and terminates the processing.

Failing to detect a silent frame F(n+1) within the predetermined time period (two minutes, for example) from the time of detecting the silent frame F(n), the program-start detecting unit 152B judges that the silent frame F(n) corresponds to a transition from a CM to a broadcast program. Thus, the program-start detecting unit 152B obtains a content ID, additional information, and a recordingperiod from the recording control unit 107B, and generates an index entry composed of the recording ID, the additional information, the recording period, and the display time of the silent frame F(n). The program-start detecting unit 152B stores the thus generated index entry to the index storage unit 104B, and terminates the processing.

### <Rule ID 4>

On judging that the rule ID is "4", the program-start detecting unit 152B performs the following.

First, the program-start detecting unit 152B detests a black frame BF(1) using a predetermined algorithm and a frame-threshold shown by the obtained detection rule, and stores the display time of the detected black frame BF (1) to the display time memory area. When detecting a black frame BF(n) within a predetermined time period (two minutes, for example) from the time of detecting a black frame BF(n-1), the program-start detecting unit 152B stores the display time of the black frame F(n) to the display time memory area ("n" is an integer equal to 2 or greater). The program-start detecting unit 152B then calculates a segment period between the two black frames BF(n-1) and BF(n) using their display times, and judges whether a program broadcast during the segment period is a CM based on the calculated segment period. For example, when a segment period is equal to 15 or 30 seconds, the program broadcast during the segment period is judged as a CM.

On judging the broadcast program is a CM, the program-start detecting unit 152B adds the segment period to the total CM period currently stored in the CM period memory area, thereby updating the total CM period. Thereafter, the program-start detecting unit 152B enters a wait state for the next black frame BF(n+1) to be detected.

On judging that the broadcast program is not a CM, the program-start detecting unit 152B further judges whether the total CM period stored in the CM period memory area exceeds the period-threshold (300 seconds, for example). On judging that the period-threshold is exceeded, the program-start detecting unit 152B obtains a content ID, additional information, and a recording period from the recording control unit 107B. The program-start detecting unit 152B then generates an index entry composed of the content ID, the additional information, the recording period, and the display time of the black frame BF(n-1), which is detected immediately before the most-recently detected black frame BF(n), and stores the thus generated index entry to the index storage unit 104B. On the other hand, on judging that the period-threshold is not exceeded, the program-start detecting unit 152B resets the total CM period to the initial value, and enters a wait state for a black frame to be detected.

Failing to detect a black frame BF(n+1) within the predetermined time period (two minutes, for example) from the time of detecting the black frame BF(n), the program-start detecting unit 152B judges that the black frame BF(n) corresponds to a transition from a CM to a broadcast program. Thus, the program-start detecting unit 152B judges whether the total CM period stored in the CM period memory area exceeds the period-threshold. On judging that the period-threshold is exceeded, the program-start detecting unit 152B obtains a content ID, additional information, and a recording period from the recording control unit 107B, and generates an index entry composed of the obtained recording ID, additional information, recording period, and the display time of the black frame BF(n), which is the most-recently detected black frame. The thus generated index entry is stored to the index storage unit 104B. On the other hand, on judging that the period-threshold is not exceeded, the program-start detecting unit 152B resets the total CM period to the initial value, and enters a wait state for a black frame to be detected.

According to the above, the period-threshold (i.e. 300 seconds) is an integral multiple of the reference value (i.e. 15 or 30 seconds) that is compared with a segment period. Yet, the period-threshold may be any value other than an integral multiple of the reference value. Furthermore, when a segment period is equal to the reference value of 15 or 30 seconds, it is judged that a program broadcast during the segment period is a CM. Yet, the judgment may be made in other manners. For example, the reference value may be set specifically to 15 seconds. When a segment period is an integral multiple of the reference value and is not exceeding the maximum period of a CM broadcast (30 second, for example), a program broadcast during the segment period is judged as a CM. In this case, the threshold (300 seconds) compared with a CMperiodmay also be an integral multiple of the reference value. Yet, the threshold needs to be longer than the maximum CM period. Furthermore, it is described above that the predetermined time period for detecting a next black frame is two minutes, for example. The predetermined time period may take any value as long as it is longer than the maximum CM period.

### 3.2 Operations of Record/Playback Apparatus 100B

Hereinafter, a description is given to the operations performed by the record/playback apparatus 100B.

Since the operations of recording period extension and thumbnail generation performed by the record/playback apparatus 100B are basically similar to those described in the embodiment 1 above, no description is given here. In the thumbnail generation, however, the index entry is obtained from the index table T200, which is described in the embodiment 2.

Furthermore, the operations of preset recording, thumbnail-list display, and presentation set generation performed by the record/playback apparatus 100B are basically similar to those described in the embodiment 2 above. Thus, no description is given here. Furthermore, the operations of index registration performed at the time of recording start are basically similar to those of the first index registration described in the embodiment 2 above. Thus, no description is given here.

### (1) Program-Start Detection

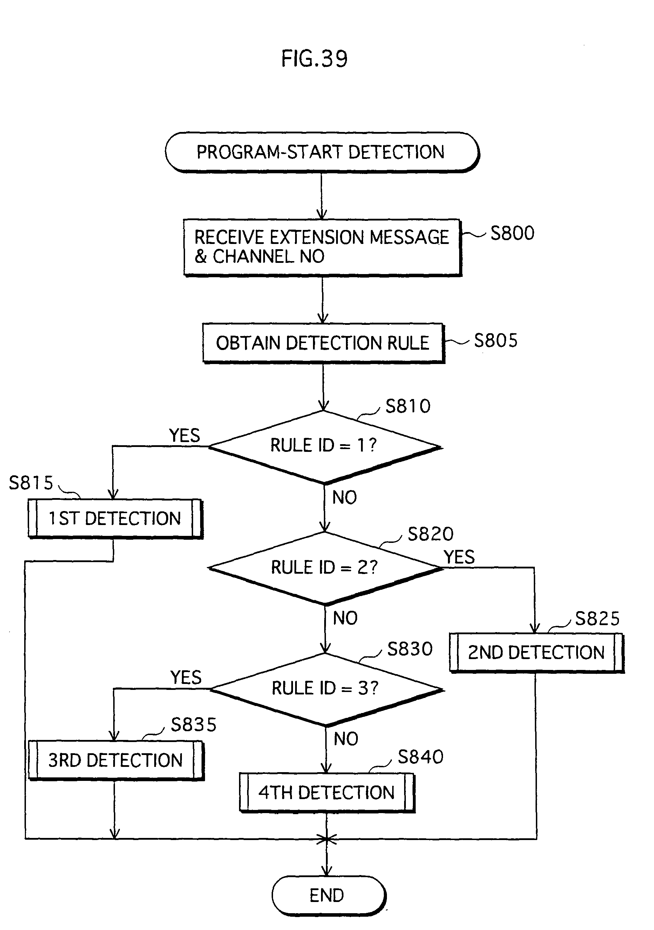

With reference to a flowchart shown in FIG. 39, a description is given to the processing performed by the program-start detecting unit 152B to detect the beginning of the target broadcast program. This processing is performed after the program-start detecting unit 152B receives an extension message from the recording control unit 107B.

On receiving an extension message and a channel number from the recording control unit 107B (step S800), the program-start detecting unit 152B obtains the country ID stored therein, and obtains, from the rule table T300, a detection rule that contains the obtained country ID and the received channel number (step S805). The program-start detecting unit 152B then judges whether a rule ID contained in the obtained rule is "1" (step S810).

On judging in the step S810 that the rule ID is "1", the program-start detecting unit 152B performs first detection (step S815)

On judging in the step S810 that the rule ID is not "1", program-start detecting unit 152B judges whether the rule ID is "2" (step S820).

On judging in the step S820 that the rule ID is "2", the program-start detecting unit 152B performs second detection (step S825).

On judging in the step S820 that the rule ID is not "2", program-start detecting unit 152B judges whether the rule ID is "3" (step 5830).

On judging in the step S830 that the rule ID is "3", the program-start detecting unit 152B performs third detection (step S835).

On judging in the step S835 that the rule ID is not "3", program-start detecting unit 152B performs fourth detection (step S840).

### (2) First Detection

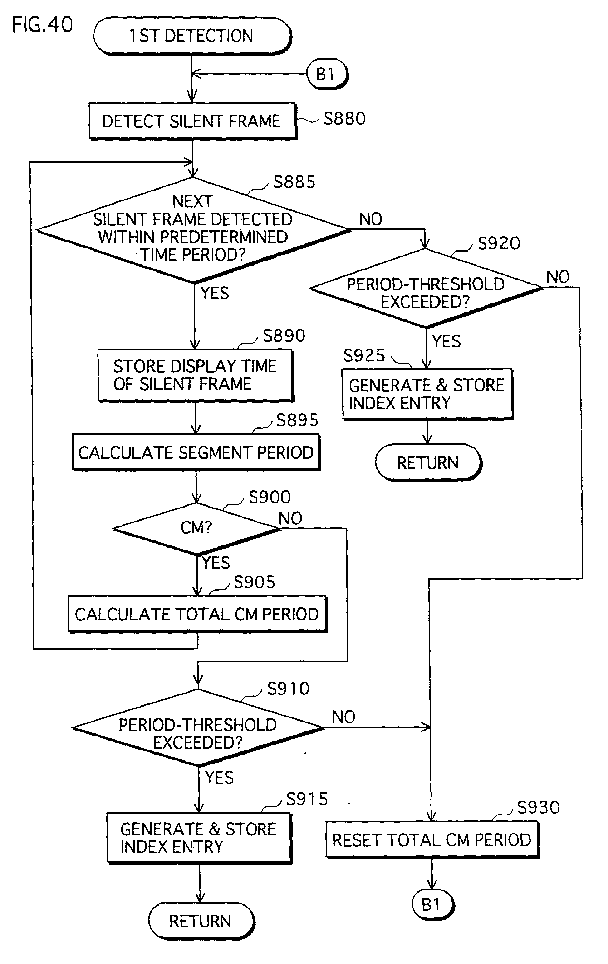

Here, a description is given to the operations performed for the first detection, with reference to a flowchart shown in FIG. 40.

First, the program-start detecting unit 152B detests a silent frame using a predetermined algorithm and a sound-threshold shown by the obtained detection rule, and stores the display time of the detected silent frame to the display time memory area (step 5880).

When detecting a next silent frame within a predetermined time period from the time of last detecting a silent frame (step S885: YES), the program-start detecting unit 152B stores the display time of the most-recently detected silent frame to the display time memory area (step 5890).

The program-start detecting unit 152B then calculates a segment period between the two silent frame F(n-1) and F(n) using their display times (step 5895). The silent frame F(n-1) is a silent frame detected immediately before the most-recently detected silent frame F(n). The program-start detecting unit 152B then judges whether a program broadcast during the segment period is a CM, based on the calculated segment period (step S900).

On judging in the step S900 that the broadcast program is a CM, the program-start detecting unit 152B adds the segment period to the total CM period currently stored in the CM period memory area, thereby updating the total CM period (step S905). The processing then goes back to the step S885.

On judging in the step S900 that the broadcast program is not a CM, the program-start detecting unit 152B judges whether the total CM period stored in the CM period memory area exceeds the period-threshold (step S910).

On judging in the step S910 that the period-threshold is exceeded, the program-start detecting unit 152B obtains a content ID, additional information, and a recording period from the recording control unit 107B. The program-start detecting unit 152B then generates an index entry composed of the content ID, the additional information, the recording period, and the display time of the silent frame F(n-1), which is detected immediately before the most-recently detected silent frame F(n). The program-start detecting unit 152B stores the thus generated index entry to the index storage unit 104B (step S915).

On the other hand, on judging in the step S910 that the period-threshold is not exceeded, the program-start detecting unit 152B resets the total CM period to the initial value (step S930). The program-start detecting unit 152B then goes back to the step S880 to repeat the above operations.

Failing to detect a next silent frame within the predetermined time period (step S885: NO), the program-start detecting unit 152B judges whether the total CM period stored in the CM period memory area exceeds the period-threshold (step S920).

On judging in the step S920 that the period-threshold is exceeded, the program-start detecting unit 152B obtains a content ID, additional information, and a recording period from the recording control unit 107B, and generates an index entry composed of the recording ID, the additional information, the recording period, and the display time of the silent frame F(n), which is the most-recently detected silent frame. The thus generated index entry is stored to the index storage unit 104B (step S925).

On the other hand, on judging in the step S925 that the period-threshold is not exceeded, the program-start detecting unit 152B performs the step S930 and the steps following thereafter.

### (3) Second Detection

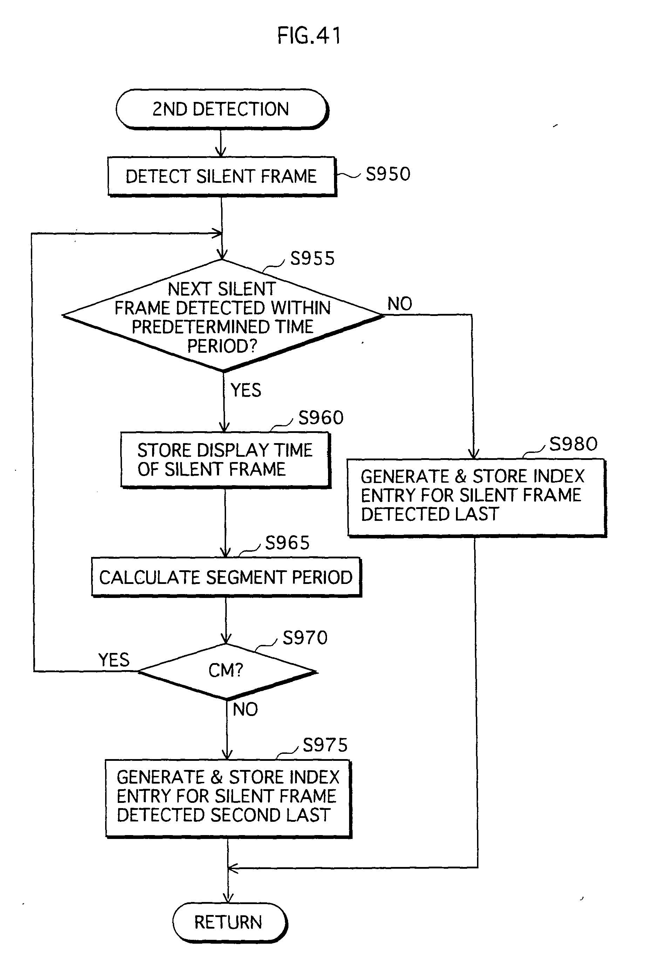

Here, a description is given to the operations performed for the second detection, with reference to a flowchart shown in FIG. 41.

First, the program-start detecting unit 152B detests a silent frame using a predetermined algorithm and a sound-threshold shown by the obtained detection rule, and stores the display time of the detected silent frame to the display time memory area (step S950).

When detecting a next silent frame within a predetermined time period from the time of last detecting a silent frame (step S955: YES), the program-start detecting unit 152B stores the display time of the most-recently detected silent frame to the display time memory area (step S960). The program-start detecting unit 152B then calculates a segment period between the two silent frames using their display times (step S965), and judges whether a program broadcast during the segment period is a CM, based on the calculated segment period (step S970).

On judging in the step S970 that the broadcast program is a CM, the program-start detecting unit 152B goes back to the step S955 to repeat the above operations.

On judging in the step S970 that the broadcast program is not a CM, the program-start detecting unit 152B judges that the frame that is detected second last corresponds to a transition from a CM to a broadcast program. Thus, the program-start detecting unit 152B obtains a content ID, additional information, and a recording period from the recording control unit 107B, and generates an index entry composed of the recording ID, the additional information, the recording period, and the display time of the silent frame that is detected second last. The program-start detecting unit 152B stores the thus generated index entry to the index storage unit 104B (step S975).

Failing to detect a next silent frame within the predetermined time period (step S955: NO), the program-start detecting unit 152B judges that themost-recentlydetected silent frame corresponds to a transition from a CM to a broadcast program. Thus, the program-start detecting unit 152B obtains a content ID, additional information, and a recording period from the recording control unit 107B, and generates an index entry composed of the recording ID, the additional information, the recording period, and the display time of the most-recently detected silent frame that is most-recently detected. The program-start detecting unit 152B stores the thus generated index entry to the index storage unit 104B (step S980).

### (4) Third Detection

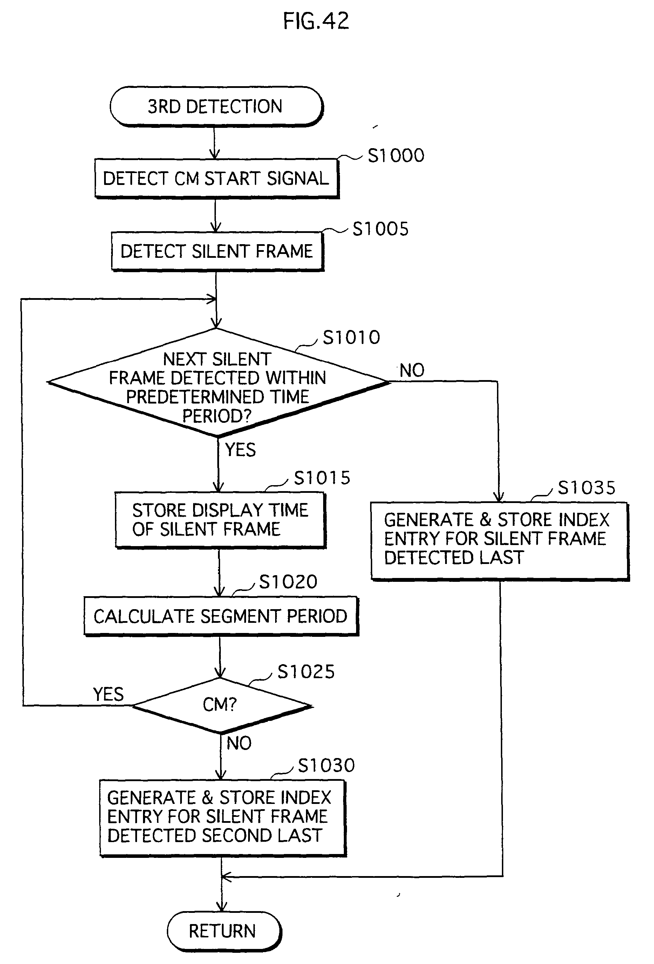

Here, a description is given to the operations performed for the third detection, with reference to a flowchart shown in FIG. 42.

On sensing a CM start signal from the content that is received from the receiving unit 105B (step 51000), the program-start detecting unit 152B detests a silent frame using a predetermined algorithm and a sound-threshold shown by the obtained detection rule, and stores the display time of the detected silent frame to the display time memory area (step 51005).

When detecting a next silent frame within a predetermined time period from the time of last detecting a silent frame (step S1010: YES), the program-start detecting unit 152B stores the display time of the most-recently detected silent frame to the display time memory area (step S1015). The program-start detecting unit 152B then calculates a segment period between the two silent frames using their display times (step S1020), and judges whether a program broadcast during the segment period is a CM, based on the calculated segment period (step S1025).

On judging in the step S1025 that the broadcast program is a CM, the program-start detecting unit 152B goes back to the step S1010 to repeat the above operations.

On judging in the step S1025 that the broadcast program is not a CM, the program-start detecting unit 152B judges that the frame detected second last corresponds to a transition from a CM to a broadcast program. Thus, the program-start detecting unit 152B obtains a content ID, additional information, and a recording period from the recording control unit 107B, and generates an index entry composed of the obtained recording ID, the additional information, the recording period, and the display time of the silent frame detected second last. The program-start detecting unit 152B stores the thus generated index entry to the index storage unit 104B (step S1030).

Failing to detect a next silent frame within the predetermined time period (step S1010: NO), the program-start detecting unit 152B judges that themost-recently detected silent frame corresponds to a transition from a CM to a broadcast program. Thus, the program-start detecting unit 152B obtains a content ID, additional information, and a recording period from the recording control unit 107B, and generates an index entry composed of the recording ID, the additional information, the recording period, and the display time of the most-recently detected silent frame. The program-start detecting unit 152B stores the thus generated index entry to the index storage unit 104B (step S1035).

### (5) Fourth Detection

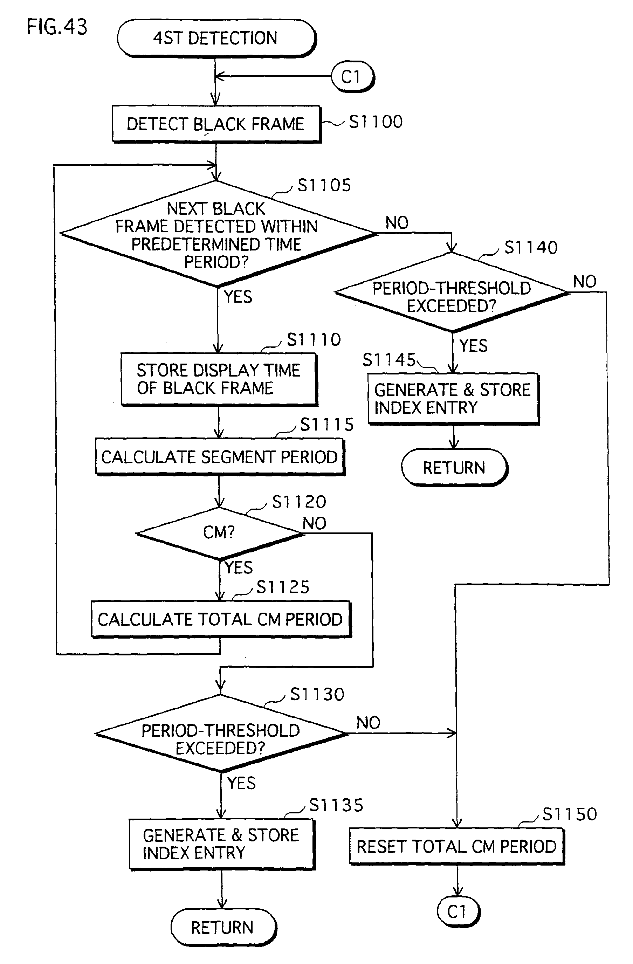

Here, a description is given to the operations performed for the fourth detection, with reference to a flowchart shown in FIG. 43.

First, the program-start detecting unit 152B detests a black frame BF using a predetermined algorithm and a frame-threshold shown by the obtained detection rule, and stores the display time of the detected black frame to the display time memory area (step S1100).

When detecting a next black frame within a predetermined time period from the time of last detecting a black frame (step S1105: YES), the program-start detecting unit 152B stores the display time of the most-recently detected black frame to the display time memory area (51110).

The program-start detecting unit 152B then calculates a segment period between the two black frames BF(n) and BF(n-1) using their display times (step S1115). The black frame BF(n-1) is a black frame detected immediately before the most-recently detected black frame BF(n). The program-start detecting unit 152B judges whether a program broadcast during the segment period is a CM, based on the calculated segment period (step S1120).

On judging in the step S1120 that the broadcast program is a CM, the program-start detecting unit 152B adds the segment period to the total CM period currently stored in the CM period memory area, thereby updating the total CM period (step S1125). Thereafter, the program-start detecting unit 152B goes back to the step S1105.

On judging in the step S1120 that the broadcast program is not a CM, the program-start detecting unit 152B judges whether the total CM period stored in the CM period memory area exceeds the period-threshold (step S1130).

On judging in the step S1130 that the period-threshold is exceeded, the program-start detecting unit 152B obtains a content ID, additional information, and a recording period from the recording control unit 107B. The program-start detecting unit 152B then generates an index entry composed of the content ID, the additional information, the recording period, and the display time of the black frame BF(n-1), which is detected before the most-recently detected black frame BF(n). The program-start detecting unit 152B stores the thus generated index entry to the index storage unit 104B (step S1135).

On the other hand, on judging in the step S1130 that the period-threshold is not exceeded, the program-start detecting unit 152B resets the total CM period to the initial value (step S1150). The program-start detecting unit 152B then goes back to the step S1100 to repeat the above operations.

Failing to detect a black frame within the predetermined time period (step S1105: NO), the program-start detecting unit 152B judges whether the total CM period stored in the CM period memory area exceeds the period-threshold (step S1140).

On judging in the step S1140 that the period-threshold is exceeded, the program-start detecting unit 152B obtains a content ID, additional information, and a recording period from the recording control unit 107B, and generates an index entry composed of the recording ID, the additional information, the recording period, and the display time of the black frame BF(n), which is the most-recently detected black frame. The thus generated index entry is stored to the index storage unit 104B (step S1145).

On judging in the step S1140 that the period-threshold is not exceeded, the program-start detecting unit 152B goes to the step S1150 and the steps following thereafter.

### 3.3 Modifications of Embodiment 3

Although the present invention has been described by way of the embodiment 3 above, it is naturally appreciated that the present invention is not limited to the specific embodiment above. Various modifications including the following still fall within the scope of the present invention.
(1) In the above embodiment, the record/playback apparatus pre-stores a country ID identifying a country where the apparatus is used. Yet, the present invention is not limited to such.
   For example, the record/playback apparatus may receive an EPG containing a country ID, thereby identifying a country where the record/playback apparatus is being used.
(2) The rule updating unit 151B is described to receive detection rules from a recording medium mounted to the record/playback apparatus. Yet, the present invention is not limited to such.
   The record/playback apparatus may be connectible to a network, such as the Internet, and receive detection rules from a server via the network.
   Further, although a DVD is taken as an example of a recording medium mounted to the record/playback apparatus, the present invention is not limited to this specific example. The recording medium may be an SD card or CD-ROM.
(3) In the above embodiment, a CM start signal is detected according to the detection rule ID "3". Yet, the present invention is not limited to such.
   Each broadcast program may be transmitted together with a program-start signal and program-end signal at the beginning and end of the program. The record/playback apparatus receives such signals, thereby detecting a transition between two successive programs.
(4) In the above embodiment, each rule ID corresponds to both a country ID and a broadcast station ID. Yet, it is also applicable that each rule ID corresponds to either a country ID or a broadcast station ID.
(5) In the above embodiment, it is also applicable that a single CM constitutes a piece of segment data.

With this arrangement, in the case of the detection rule of which rule ID is "1" or "4", if the total period of pieces of consecutively broadcast segment data (i.e. the total CM period) exceeds a threshold, it is judged that the pieces of segment data are broadcast between two different broadcast programs. The detection of such consecutively broadcast segment data allows the record/playback apparatus to judge that a transition from one broadcast program to another has taken place, so that the target broadcast program can be indexed.

In the case of the detection rule of which rule ID is "2" or "3", the record/playback apparatus judges that a transition from one broadcast program to another has taken place by detecting consecutive pieces of segment data broadcast between two programs. This judgment allows the record/playback apparatus to index the target broadcast program.

### 4. OTHER MODIFICATIONS

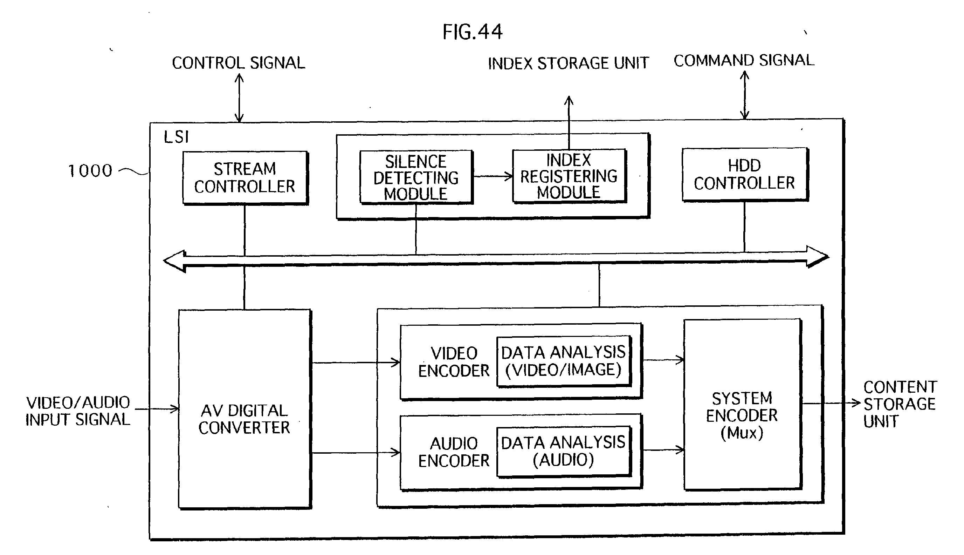

Up to this point, the present invention has been described byway of the above embodiments and modifications. Yet, it should be naturally appreciated that the present invention is in no way limited to the specific embodiments and modifications described above. Other modifications including the following fall within the scope of the present invention.
(1) The present invention may be embodied as an LSI controlling the record/playback apparatus. Such an LSI may be realized, as shown in FIGs. 2, 12, and 37, by integrating part or all of the functional blocks enclosed within a dotted box. The functional blocks may be integrated as separate IC chips or together as a single-chip IC.
   For example, FIG. 44 shows an LSI 1000 implementing the recording control unit 107, the silence detecting unit 108, and the index registering unit 109. On receiving a recording command according to a record presetting, the LSI 1000 digitizes video data and audio data constituting a broadcast program that is received by the receiving unit 105, and compression encodes the digitized data in a video encoder and an audio encoder to generate elementary streams. Then, the system encoder multiplexes the audio and video elementary streams into a program stream. The multiplexed program stream is then outputted to the content storage unit 101. Further, when it is judged that the recording period of target broadcast program is extended, the LSI 1000 generates, in the silence detecting module and the index registering module, an index entry using the audio data that is received by the receiving unit 105. The thus generated index entry is outputted to the index storage unit 104.
   Here, the present invention is described to be possibly embodied as an LSI controlling the record/playback apparatus. The LSI given as an example may be referred to as an IC, a system LSI, a super LSI, or an ultra LSI, depending on the scale of integration.
   Also, the integration scheme is not limited to large-scale integration, and may be realized as a dedicated circuit or a general-purpose processor. Alternatively, a FPGA (field programmable gate array) programmable after the LSI has been manufactured, a reconfigurable processor capable of reconfiguring the connections and settings of circuit cells within an LSI, or the like, may be employed.
   Further, if integration technology that replaces large-scale integration becomes available as a result of advances in semiconductor technology or the advent of derivative technology, the integration of the functional blocks may naturally be performed using this technology. The application of biotechnology or the like in this area is also a possibility.
(2) In the above embodiment, extension information is detected from an EPG. Yet, the present invention is not limited to such. For example, the record/playback apparatus may capable of communicating with a mobile phone. The record/playback apparatus may receive from the mobile phone, extension information showing that an extension of a program scheduled to be broadcast before a target broadcast program is possible.
   On receiving the extension information from the mobile phone, the record/playback apparatus alters the extension setting from "NO" to "YES" in the manner described in the above embodiments. The operations to be performed thereafter are the same as those described in the above embodiments. Thus, no further description is given.
(3) The application of the present invention is not limited to the record/playback apparatus. The present invention may be applied to a recorder for recording audio. Such a recorder performs the indexing of a broadcast program preset to be recorded in the similar manner to the above embodiment. Thus, no further description is given.
(4) In the above embodiment, the record/playback apparatus starts recording on judging that the current time has reached the start date/time shown by presetting information. Yet, the present invention is not limited to such. For example, the record/playback apparatus may pre-store an adjustment period (one minute, for example). With this arrangement, the record/playback apparatus starts recording on judging that the current time has reached the time that is calculated subtracting the adjustment period from the start date/time. Suppose, for example, the start date/time is "July 8, 2004, 19:00" and the adjustment period is one minute. The record/playback apparatus starts recording on judging that the current time has reached "July 8, 2004, 18:59", which is one minute in advance of the start/date time.
(5) Also applicable is a broadcast program recording apparatus for receiving and recording a target broadcast program which is preset to be recorded. The broadcast program recording apparatus includes: a schedule storage unit storing a start time at which the target broadcast program is scheduled to be broadcast; a receiving unit operable to receive broadcast data; an extension information obtaining unit operable to obtain extension information showing that broadcast of a program preceding the target broadcast program will be extended; a start judging unit operable to judge whether a current time has reached the start time and to judge to start recording the broadcast data if the current time is judged to have reached the start time; a writing unit operable to write, when the start judging unit judges to start recording, the broadcast data onto a recording medium; a judging unit operable to judge whether the broadcast data being written is program data or segment data which is sufficiently shorter than the target broadcast program; a monitoring unit operable to monitor, after the judging unit judges that the broadcast data is segment data, whether segment data of a same type is consecutively received; an extracting unit operable, if the judging unit judges that the broadcast data is program data, to extract an end time of a piece of segment data that is received immediately preceding the program data, the extraction being performed when a predetermined condition is satisfied; and a start-position recording unit operable to record, as a start position of the target broadcast program, a position corresponding on the recording medium to the extracted end time.
(6) Also applicable is a broadcast program recording apparatus for receiving broadcast data and starting to record a target broadcast program which is preset to be recorded onto a recording medium, when a scheduled broadcast start time of the target broadcast program is reached. The broadcast program recording apparatus includes: an extension information obtaining unit operable to obtain extension information showing that broadcast of a program preceding the target broadcast program will be extended; a judging unit operable to judge, if the extension information is obtained, whether the broadcast data being written after the scheduled broadcast start time is program data or segment data which is sufficiently shorter than the target broadcast program; a monitoring unit operable to monitor, after the judging unit judges that the broadcast data is segment data, whether segment data of a same type is consecutively received; an extracting unit operable to extract, if the judging unit judges that the broadcast data is program data, an end time of a piece of segment data that is received immediately preceding the program data; and a start-position recording unit operable to record, as a start position of the target broadcast program, a position corresponding on the recording medium to the extracted end time.
   With this arrangement, on judging that the broadcast data being written is segment data, the broadcast program recording apparatus monitors whether segment data of a same type is consecutively received. On judging that the broadcast program being written is program data, the broadcast program recording apparatus records, as a start position of the target broadcast program, a position corresponding on the recording medium to the end time of apiece of segment data that is received immediately before the program data.
(7) Also applicable is a broadcast program recording apparatus for receiving broadcast data and starting to record a target broadcast program which is preset to be recorded onto a recording medium, when a scheduled broadcast start time of the target broadcast program is reached. The broadcast program recording apparatus includes: an extension information obtaining unit operable to obtain extension information showing that broadcast of a program preceding the target broadcast program will be extended; a judging unit operable to judge, if the extension information is obtained, whether the broadcast data being written after the scheduled broadcast start time is program data or segment data which is sufficiently shorter than the target broadcast program; an extracting unit operable to extract, if the judging unit judges that the broadcast data is program data, an end time of a piece of segment data that is received immediately preceding the program data, the extraction being performed when a predetermined condition is satisfied; and a start-position recording unit operable to record, as a start position of the target broadcast program, a position that corresponds on the recording medium to the extracted end time.
   With this arrangement, on judging that the broadcast data being written is program data, the broadcast program recording apparatus extracts the end time of apiece of segment data that is received immediately before the program data when the predetermined condition is satisfied. The broadcast program recording apparatus then records, as the start position of the target broadcast program, a position that corresponds on the recording medium to the extracted end time.
(8) Also applicable is a broadcast program recording apparatus for receiving broadcast data and starting to record a target broadcast program which is preset to be recorded onto a recording medium, when a scheduled broadcast start time of the target broadcast program is reached. The broadcast program recording apparatus includes: an extension information obtaining unit operable to obtain extension information showing that broadcast of a program preceding the target broadcast program will be extended; a judging unit operable to judge, if the extension information is obtained, broadcast data being written after the scheduled broadcast start time is program data or segment data which is sufficiently shorter than the target broadcast program; an extracting unit operable to extract, if the judging unit judges that the broadcast data is program data, an end time of a piece of segment data that is received immediately preceding the program data; and a start-position recording unit operable to record, as a start position of the target broadcast program, a position that corresponds on the recording medium to the extracted end time.
   With this arrangement, on judging that the broadcast data being written is program data, the broadcast program recording apparatus extracts the end time of a piece of segment data that is received immediately preceding the program data, and records, as the start position of the target broadcast program, a position that corresponds on the recording medium to the extracted end time.
(9) The present invention may be embodied as the methods described above. Furthermore, the present invention may be embodied as computer programs realizing the methods by a computer, or digital signals representing the computer programs.
   Furthermore, the present invention may be embodied as a computer-readable recording medium storing the computer programs or the digital signals. Examples of such a recording medium include a flexible disk, a hard disk, CD-ROM, MO, DVD, DVD-ROM, DVD-RAM, BD (Blu-ray Disc) and a semiconductor memory. Furthermore, the present invention may be embodied as the computer program or the digital signal recorded on any recording medium mentioned above.
   Furthermore, the present invention may be embodied as the computer programs or the digital signals transmitted via an electric communication line, wireless communications, a wired communication line, or a network typified by the Internet.
   Furthermore, the present invention may be embodied as a computer system composed of a microprocessor and memory. The memory stores the computer programs mentioned above, and the microprocessor may operate according to the computer programs.
   Furthermore, the programs or the digital signals may be transferred in form of a recording medium mentioned above, or via a network mentioned above, so that the programs or the digital signals may be executed by another independent computer system.
(10) Further, the above embodiments and modifications may be used in varying combinations.

### 5. RECAPITULATION

Here, a description is given to the correspondences between the structures described in the above embodiments and the structures of the present invention.
(1) Extension Information Obtaining Unit
   The extension information obtaining unit corresponds to an operation performed by the EPG registering unit 106 described in the embodiment 1 to obtain extension information of a program that is scheduled to be broadcast before the target broadcast program. The extension information is obtained, from the EPG stored in the EPG storing unit 103, with reference to the start date/time and channel contained in the presetting information.
(2) Judging Unit
   The judging unit corresponds to an operation performed by the index registering unit 109 described in the embodiment 1 to judge, using a segment period, whether a program broadcast during the segment period is a CM or not.
(3) Monitoring Unit
   The monitoring unit corresponds to the routine of repeating the steps S100, S105, and S110 of the index registration processing shown in FIG. 9.
(4) Extracting Unit
   The extracting unit corresponds to an operation performed by the index registering unit 109 described in the embodiment 1 to obtain a display time from its memory area.
(5) Start-Position Recording Unit
   The start-position recording unit corresponds to an operation performed by the index registering unit 109 to write an index entry.
(6) Accumulating Unit
   The accumulating unit corresponds to an operation performed by the index registering unit 109 to add a segment period to the total CM period.
(7) Comparison Subunit
   The comparison subunit corresponds to an operation performed by the index registering unit 109 described in the embodiment 1 to judge whether the total CM period has exceeded the threshold.
(8) Storage Unit
   The storage unit corresponds to the rule storage unit 150B described in the embodiment 3.
(9) Selecting Unit
   The selecting unit corresponds to an operation performed by the program-start detecting unit 152B to obtain a detection rule from the rule table T300.
(10) Program Guide Storage Unit
   The program guide storage unit corresponds to the EPG storage unit 103 described in the embodiment 1.
(11) Storage Area
   The storage area corresponds to the index storage unit 104 described in the embodiment 1.
(12) Instruction Receiving Unit
   The instruction receiving unit corresponds to the user-selection unit 113 described in the embodiment 1.
(13) First Obtaining Unit
   The first obtaining unit corresponds to an operation performed by the thumbnail generating unit 111 described in the embodiment 1 to obtain a frame corresponding to a display time contained in an index entry.
(14) Second Obtaining Unit
   The second obtaining unit corresponds to an operation performed by the thumbnail generating unit 111A described in the embodiment 2 to obtain a frame corresponding to a display time contained in an index entry.
(15) Image Generating Unit
   The image generating unit corresponds to an operation performed by the thumbnail generating unit 111A described in the embodiment 2 to generate a thumbnail image from the obtained frame.
(16) Display Unit
   The display unit corresponds to the thumbnail-list display unit 112A described in the embodiment 2.
(17) Playback Unit
   The playback unit corresponds to the playback unit 114 described in the embodiment 1.

### Industrial Applicability

The record/playback apparatuses consistent with the present invention can be used administratively again and again over a long period of time in industries of manufacturing and distributing the record/playback apparatuses.

## Claims

1. A broadcast program recording apparatus for receiving broadcast data and recording a target broadcast program which is preset to be recorded onto a recording medium, the recording starting at a scheduled broadcast time of the target broadcast program, the apparatus comprising:
an extension information obtaining unit operable to obtain extension information showing that broadcast of a program preceding the target broadcast program will be extended;
a judging unit operable to judge, if the extension information is obtained, whether broadcast data being recorded after the scheduled broadcast time is segment data that is sufficiently shorter than the target broadcast program or program data;
a monitoring unit operable to monitor, after the judging unit judges that the broadcast data is segment data, whether segment data of a same type is consecutively received;
an extracting unit operable to extract, if the judging unit judges that the broadcast data is program data, an end time of a piece of segment data immediately preceding the program data, the extraction being performed when a predetermined condition is satisfied; and
a start-position recording unit operable to record, as a start position of the target broadcast program, a position corresponding on the recording medium to the extracted end time.

2. The broadcast program recording apparatus according to Claim 1, wherein
the predetermined condition is that a total time period of consecutively received pieces of segment data is longer than a reference value,
the monitoring unit is an accumulating unit operable to keep accumulating, if the judging unit judges that the broadcast data is segment data, a time period of each piece of segment data until the judging unit next judges that the broadcast data is program data, and
the extracting unit (i) includes a comparison subunit operable to compare, if the judging unit judges that the broadcast data is program data, a reference value with a total time period of pieces of segment data up to the one immediately preceding the program data, and (ii) extracts the end time of the immediately preceding piece of segment data if the comparison subunit judges that the total time period is equal to or longer than the reference value.

3. The broadcast program recording apparatus according to Claim 2, wherein
each piece of segment data is CM data for displaying an advertisement,
the time period of each piece of segment data is unique to a CM data broadcast, and
the judging unit makes the judgment by comparing the unique time period with a time interval between transition frames present in the broadcast data being recorded.

4. The broadcast program recording apparatus according to Claim 3, wherein
the unique time period is an integral multiple of a minimum time period of a CM data broadcast and equal to or shorter than a maximum time period of a CM data broadcast.

5. The broadcast program recording apparatus according to Claim 4, wherein
the reference value is an integral multiple of the minimum time period and longer than the maximum time period.

6. The broadcast program recording apparatus according to Claim 3, wherein
if the broadcast data includes audio data, each transition frame is a silent frame, and
the judging unit judges that the broadcast data is CM data if a time interval between two silent frames successive in time sequence is equal to the unique time period.

7. The broadcast program recording apparatus according to Claim 3, wherein
the monitoring unit includes a timer that is set each time a silent frame is detected, and judges that the broadcast data being recorded is program data if the timer measures a predetermined time period before reception of a next silent frame.

8. The broadcast program recording apparatus according to Claim 3, wherein
if the broadcast data includes image data, each transition frame is a black frame, and
the judging unit detects two black frames successive in time sequence, and judges that the broadcast data is CM data if a time interval between the two black frames is equal to the unique time period.

9. The broadcast program recording apparatus according to Claim 3, wherein
the monitoring unit includes a timer that is set each time a black frame is detected, and judges that the broadcast data being recorded is program data if the timer measures a predetermined time periodbefore reception of a next black frame.

10. The broadcast program recording apparatus according to Claim 1, wherein
the predetermined condition is a detection rule,
the apparatus further comprising:
a storage unit that stores therein two detection rules; and
a selecting unit operable to select one of the detection rules stored in the storage unit, based on a channel on which the target broadcast program is scheduled to be broadcast and/or a region in which the apparatus is sited, wherein
the start-position recording unit judges whether the end time of the piece of segment data immediately preceding the program data is acceptable as the start position of the target broadcast program in accordance with the selected detection rule.

11. The broadcast program recording apparatus according to claim 10, wherein
one of the detection rules determines that in a case where two or more pieces of segment data are consecutive and a total time period of the consecutive pieces of segment data is longer than a reference value, a recording-end position of a last one of the consecutive pieces of segment data on the recording medium serves as the start position of the target broadcast program.

12. The broadcast program recording apparatus according to Claim 10, wherein
one of the detection rules determines that in a case where one or more pieces of segment data are consecutive and program data is received subsequent to the consecutive pieces of segment data, a recording-end position of a piece of segment data immediately preceding the program data serves as the start position of the target broadcast program.

13. The broadcast program recording apparatus according to Claim. 1, wherein
the start-position recording unit is further operable to record, as a recording-start position, a position on the recording medium from which the recording unit starts recording.

14. The broadcast program recording apparatus according to Claim 13, further comprising:
a program guide storage unit operable to store therein an electronic program guide showing broadcast schedules of a plurality of programs and including extension information showing that broadcast of at least one program will be extended, and
the extension information obtaining unit obtains the extension information from the electronic program guide.

15. The broadcast program recording apparatus according to Claim 13, wherein
the start-position recording unit records the start position and the recording-start position in a storage area allocated within the apparatus.

16. The broadcast program recording apparatus according to Claim 15, wherein
the start-position recording unit records, as the start position and the recording-start position, a time elapsed from the recording start to the respective position.

17. The broadcast program recording apparatus according to Claim 15, wherein
the recording medium has broadcast programs recorded thereon, including a broadcast program which was a target broadcast program, and
the storage area stores the start position and the recording-start position of the target broadcast program on the recording medium,
the apparatus further comprising:
an instruction receiving unit operable to receive an instruction for thumbnail-list display;
a first obtaining unit operable to obtain a first image from the recording medium, the first image being located at a position that is after a predetermined time from an image located at the recording-start position;
a second obtaining unit operable to obtain a second image or a third image from the recording medium, the second image being located at the recording-start position and the third image being located at a position that is after a predetermined time from the second image;
an image generating unit operable to generate a program-start thumbnail image showing the obtained first image and a recording-start thumbnail image showing the second or the third image; and
a display unit operable to display the generated program-start thumbnail image and the generated recording-start thumbnail image.

18. The broadcast program recording apparatus according to Claim 17, further comprising:
a playback unit operable to read and play back a program recorded on the recording medium in one of selectable playback modes, wherein
the selectable playback modes include a first playback mode in which the playback unit searches the recording medium for an image shown by the program-start thumbnail image, and starts the playback from the searched image, and
the display unit displays, together with the program-start thumbnail image, search playback image information representing the first playback mode.

19. The broadcast program recording apparatus according to Claim 18, wherein
the selectable playback modes further includes a second playback mode in which the playback unit starts the playback from an image shown by the recording-start thumbnail image, and
the display unit displays, together with the recording-start thumbnail image, non-search playback image information representing the second playback mode.

20. The broadcast program recording apparatus according to Claim 19, wherein
the display unit is further operable to generate a graphical image representing an entire length of a program recorded on the recording medium, to mark the generated graphical image so as to indicate where in the program the program-start thumbnail image and the recording-start thumbnail image are located, and to display the marked graphical image.

21. The broadcast program recording apparatus according to Claim 20, wherein
the storage area stores display information relating to the program, in correspondence with the start position and the recording-start position, and
the display unit displays the program-start thumbnail image and the recording-start thumbnail image each together with the display information.

22. Display data for displaying image data included in a broadcast program recorded by a broadcast program recording apparatus that is for receiving and recording broadcast programs, the display data comprising:
a thumbnail image corresponding to a piece of image data included in the recorded broadcast program; and
a graphical representation of a position of the thumbnail image relative to the entire recorded broadcast program.

23. The display data according to Claim 22, wherein
the recorded broadcast program includes a target broadcast program preset to be recorded,
the thumbnail image corresponds to image data located at a beginning of the target broadcast program,
the display data further comprising:
search playback image information representing a playback mode in which the playback apparatus searches the recorded broadcast program for the image data corresponding to the thumbnail image and plays back the recorded broadcast program starting from the searched image data.

24. The display data according to Claim 22, wherein
the thumbnail image corresponds to image data located at a beginning of the recorded broadcast program,
the display data further comprising:
non-search playback image information representing a playback mode in which the playback apparatus plays back the recorded broadcast program starting from the beginning of the recorded broadcast program.

25. An integrated circuit for a broadcast program recording apparatus that receives broadcast data and records a target broadcast program which is preset to be recorded onto a recording medium, the recording starting at a scheduled broadcast time of the target broadcast program,
the apparatus including an extension information obtaining unit operable to obtain extension information showing that broadcast of a program preceding the target broadcast program will be extended,
the circuit comprising:
a judging module operable to judge, if the extension information is obtained, whether broadcast data being recorded after the scheduled broadcast time is segment data that is sufficiently shorter than the target broadcast program or program data;
a monitoring module operable to monitor, after the judging module judges that the broadcast data is segment data, whether segment data of a same type is consecutively received;
an extracting module operable to extract, if the judging module judges that the broadcast data is program data, an end time of a piece of segment data immediately preceding the program data, the extraction being performed when a predetermined condition is satisfied; and
a start-position recording module operable to record, as a start position of the target broadcast program, a position corresponding on the recording medium to the extracted end time.

26. A data position locating method for use by a broadcast program recording apparatus that receives broadcast data and records a target broadcast program which is preset to be recorded onto a recording medium, the method comprising the steps of:
obtaining extension information showing that broadcast of a program preceding the target broadcast program will be extended;
judging, if the extension information is obtained, whether broadcast data being recorded after the scheduled broadcast time is segment data that is sufficiently shorter than the target broadcast program or program data;
monitoring, after the broadcast data is judged in the judging step to be segment data, whether segment data of a same type is consecutively received;
extracting, if the broadcast data is judged in the judging step to be program data, an end time of a piece of segment data immediately preceding the program data, the extraction being performed when a predetermined condition is satisfied; and
recording, as a start position of the target broadcast program, a position corresponding on the recording medium to the extracted end time.

27. A data position locating program for use by a broadcast program recording apparatus that receives broadcast data and records a target broadcast program which is preset to be recorded onto a recording medium, the program comprising the steps of:
obtaining extension information showing that broadcast of a program preceding the target broadcast program will be extended;
judging, if the extension information is obtained, whether broadcast data being recorded after the scheduled broadcast time is segment data that is sufficiently shorter than the target broadcast program or program data;
monitoring, after the broadcast data is judged in the judging step to be segment data, whether segment data of a same type is consecutively received;
extracting, if the broadcast data is judged in the judging step to be program data, an end time of a piece of segment data immediately preceding the program data, the extraction being performed when a predetermined condition is satisfied; and
recording, as a start position of the target broadcast program, a position corresponding on the recording medium to the extracted end time.

28. A computer-readable recording medium storing a data position locating program for use by a broadcast program recording apparatus that receives broadcast data and records a target broadcast program which is preset to be recorded onto another recording medium, the program comprising the steps of:
obtaining extension information showing that broadcast of a program preceding the target broadcast program will be extended;
judging, if the extension information is obtained, whether broadcast data being recorded after the scheduled broadcast time is segment data that is sufficiently shorter than the target broadcast program or program data;
monitoring, after the broadcast data is judged in the judging step to be segment data, whether segment data of a same type is consecutively received;
extracting, if the broadcast data is judged in the judging step to be program data, an end time of a piece of segment data immediately preceding the program data, the extraction being performed when a predetermined condition is satisfied; and
recording, as a start position of the target broadcast program, a position corresponding on the other recording medium to the extracted end time.
